# EUROPEAN PATENT APPLICATION

(11) **EP 4 610 897 A1**
(43) Date of publication of application: **03.09.2025**
(21) Application number: 23884807.1
(22) Date of filing: 30.10.2023
(51) Int. Cl.: G06N 20/00

(54) **COMMUNICATION METHOD, AND APPARATUS**

(30) Priority: 04.11.2022 CN 202211380013
(71) Applicant: Huawei Technologies Co., Ltd., Shenzhen, Guangdong 518129 (CN)
(72) Inventor: SHI, Xiaoli, Shenzhen, Guangdong 518129 (CN); XU, Ruiyue, Shenzhen, Guangdong 518129 (CN); ZOU, Lan, Shenzhen, Guangdong 518129 (CN)
(74) Representative: Epping - Hermann - Fischer
(86) International application number: PCT/CN2023/127584
(87) International publication number: WO 2024/093876

(57) **Abstract**

Embodiments of this application provide a communication method and apparatus. In the method, a first device determines a first training termination parameter for an AI/ML model, where the first training termination parameter may include one or more of a training error, a quantity of iteration times, training time, a status of a first resource, or target performance, and the first resource is a resource related to training of the AI/ML model; and sends the first training termination parameter to a second device configured to train the AI/ML model, where the first training termination parameter is used to terminate training of the AI/ML model. In this way, the second device can terminate training of the AI/ML model based on the first training termination parameter in a process of training the AI/ML model, implementing termination of training of the AI/ML model.

## Description

### CROSS-REFERENCE TO RELATED APPLICATIONS

This application claims priority to Chinese Patent Application No. 202211380013.7, filed with the China National Intellectual Property Administration on November 4, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In recent years, artificial intelligence/machine learning (artificial intelligence/machine learning, AI/ML) technologies are increasingly popular and widely used in various fields, such as a management data analytics service (management data analytics service, MDAS), a network data analytics service, image processing, and natural language processing. The AI/ML technologies involve an AI/ML management service (management service, MnS) producer (producer) and an AI/ML MnS consumer (consumer). The AI/ML MnS producer can provide an AI/ML model for an authorized AI/ML MnS consumer.

Currently, the AI/ML MnS consumer may send a request message to the AI/ML MnS producer. The request message is used to request to obtain an AI/ML model. The AI/ML MnS consumer may initiate training of the AI/ML model based on the request message. Alternatively, the AI/ML MnS consumer may actively initiate training of the AI/ML model. However, there is no related solution for how the AI/ML MnS producer terminates training of the AI/ML model.

### SUMMARY

Embodiments of this application provide a communication method and apparatus, to implement termination of training of an AI/ML model.

According to a first aspect, an embodiment of this application provides a communication method. The method may be performed by a first device, or may be performed by a component of a first device. In the method, the first device determines a first training termination parameter for an AI/ML model, and sends the first training termination parameter to a second device configured to train the AI/ML model. The first training termination parameter may include one or more of a training error, a quantity of iteration times, training time, a status of a first resource, or target performance. The first training termination parameter is used to terminate training of the AI/ML model. The first resource is a resource related to training of the AI/ML model.

In this embodiment of this application, the first device may send the first training termination parameter to the second device, so that the second device can terminate training of the AI/ML model based on the first training termination parameter. Therefore, a training process of the AI/ML model is not performed infinitely, and training efficiency of the AI/ML model is improved.

In a possible implementation, the first device may be an AI/ML model training consumer, and the second device may be an AI/ML model training producer. For example, the AI/ML model training consumer may include a domain management function unit or a cross-domain management function unit. For example, the AI/ML model training producer may include a domain management function unit or a cross-domain management function unit. It may be understood that in this embodiment of this application, the AI/ML model training consumer may be an AI/ML MnS consumer, and the AI/ML model training producer may be an AI/ML MnS producer.

In a possible implementation, the target performance may include one or more of accuracy, precision, or an F1 score.

In a possible implementation, the first resource may include the resource related to training of the AI/ML model in a central processing unit (central processing unit, CPU) resource, a storage resource, a network resource, or the like.

In a possible implementation, the method may further include: The first device receives a first message from the second device, where the first message indicates that training of the AI/ML model is terminated. Therefore, the first device may determine that training of the AI/ML model has been terminated.

In a possible implementation, the first message includes cause information for terminating training of the AI/ML model, and the cause information may indicate a training anomaly of the AI/ML model, or indicate that a training parameter of the AI/ML model satisfies the first training termination parameter. In this way, the first device may determine a reason for terminating training of the AI/ML model.

In a possible implementation, if the cause information indicates the training anomaly of the AI/ML model, and the training anomaly of the AI/ML model is AI/ML that training data of the AI/ML model is inadequate, in this case, the first device may send, to the second device, training data used to train the AI/ML model, so that the second device has adequate training data, reducing a problem that training of the AI/ML model is abnormally terminated due to inadequate training data.

In a possible implementation, the first message may further include one or more of the following information:
an identifier of the AI/ML model;
type information of the AI/ML model;
version information of the AI/ML model;
a performance parameter of the AI/ML model;
duration consumed for training the AI/ML model;
a quantity of iteration times for training the AI/ML model;
progress information, where the progress information is a progress of completing training of the AI/ML model by the second device when the second device terminates training of the AI/ML model;
first estimated duration, where the first estimated training duration is duration further needed by the second device to complete training of the AI/ML model when the second device terminates training of the AI/ML model; or
a first estimated quantity of iteration times, where the first estimated quantity of iteration times is a quantity of iteration times further needed by the second device to complete training of the AI/ML model when the second device terminates training of the AI/ML model.

In the foregoing implementation, the first device may receive, from the second device, information related to the AI/ML model (for example, the identifier of the AI/ML model or the type information of the AI/ML model) and/or information related to training of the AI/ML model (for example, the performance parameter of the AI/ML model, the duration consumed for training the AI/ML model, the quantity of iteration times for training the AI/ML model, the progress information, the first estimated duration, or the first estimated quantity of iteration times). On the one hand, the first device may determine, based on the information related to the AI/ML model, the AI/ML model for which training is terminated. On the other hand, the first device may adaptively adjust a training termination parameter based on the information related to training of the AI/ML model, to improve accuracy of a training result of the AI/ML model, and reduce a problem that no training result is obtained due to inadequate training time, an inadequate iteration count, or the like.

In a possible implementation, the first device may determine the first training termination parameter for the artificial intelligence/machine learning AI/ML model in the following manner: The first device receives a second training termination parameter for the AI/ML model from the second device, where the second training termination parameter includes one or more of the following parameters: a training error, a quantity of iteration times, training time, a status of a first resource, or target performance. The first device determines the first training termination parameter based on the second training termination parameter.

In the foregoing implementation, the first device may determine the first training termination parameter, or may determine the first training termination parameter based on the second training termination parameter from the second device. This implementation is flexible and has strong adaptability.

In a possible implementation, the first training termination parameter may further include the identifier of the AI/ML model and/or the type information of the AI/ML model. The type information of the AI/ML model indicates a type of the AI/ML model. The type of the AI/ML model may include one or more of coverage problem analysis, slice coverage problem analysis, paging optimization analysis, fault analysis, fault prediction analysis, end-to-end latency analysis, energy saving analysis, mobility analysis, network slice load analysis, network slice throughput analysis, key performance indicator anomaly analysis, or software upgrade analysis. In this way, the second device may determine the AI/ML model to which the first training termination parameter is applied and an application scenario of the AI/ML model.

In a possible implementation, the first training termination parameter includes the training error and the type information of the AI/ML model, and the type information of the AI/ML model indicates that the type of the AI/ML model is coverage problem analysis. In this case, the training error is an error corresponding to a coverage problem. The coverage problem may include one or more of a weak coverage problem, an over coverage problem, an overshoot coverage problem, a coverage hole problem, or a pilot pollution problem. The error corresponding to the coverage problem includes one or more of an error of reference signal received power, an error of reference signal received quality, or an error of a signal to interference plus noise ratio.

In another possible implementation, the first training termination parameter includes the training error and the type information of the AI/ML model, and the type information of the AI/ML model indicates that the type of the AI/ML model is energy saving analysis. In this case, the training error includes an error of energy efficiency and/or an error of energy consumption.

According to a second aspect, an embodiment of this application provides a communication method. The method may be performed by a second device, or may be performed by a component of a second device. In the method, the second device determines a first training termination parameter for an AI/ML model, where the first training termination param eter includes one or more of the following parameters: a training error, a quantity of iteration times, training time, a status of a first resource, or target performance. The second device performs training of the AI/ML model, and terminates training of the AI/ML model based on the first training termination parameter. The first resource is a resource related to training of the AI/ML model.

In this embodiment of this application, the second device may determine a training termination parameter for the AI/ML model, and terminate training of the AI/ML model based on the training termination parameter in a process of training the AI/ML model, to implement termination of training of the AI/ML model.

In a possible implementation, the method may further include: The second device sends a first message to a first device, where the first message indicates that training of the AI/ML model is terminated.

In a possible implementation, the first device may be an AI/ML model training consumer, and the second device may be an AI/ML model training producer. For example, the AI/ML model training consumer may include a domain management function unit or a cross-domain management function unit. For example, the AI/ML model training producer may include a domain management function unit or a cross-domain management function unit. It may be understood that in this embodiment of this application, the AI/ML model training consumer may be an AI/ML MnS consumer, and the AI/ML model training producer may be an AI/ML MnS producer.

In a possible implementation, the target performance may include one or more of accuracy, precision, or an F1 score.

In a possible implementation, the first resource may include the resource related to training of the AI/ML model in a CPU resource, a storage resource, a network resource, or the like.

In a possible implementation, the first message includes cause information for terminating training of the AI/ML model, and the cause information indicates that a training parameter of the AI/ML model satisfies the first training termination parameter.

In a possible implementation, the first message may further include one or more of the following information:
an identifier of the AI/ML model;
type information of the AI/ML model;
version information of the AI/ML model;
a performance parameter of the AI/ML model;
duration consumed for training the AI/ML model;
a quantity of iteration times for training the AI/ML model;
progress information, where the progress information is a progress of completing training of the AI/ML model by the second device when the second device terminates training of the AI/ML model;
first estimated duration, where the first estimated training duration is duration further needed by the second device to complete training of the AI/ML model when the second device terminates training of the AI/ML model; or
a first estimated quantity of iteration times, where the first estimated quantity of iteration times is a quantity of iteration times further needed by the second device to complete training of the AI/ML model when the second device terminates training of the AI/ML model.

In a possible implementation, the second device may determine the first training termination parameter in the following manner: The second device receives the first training termination parameter from the first device.

In the foregoing implementation, the second device may determine the first training termination parameter, or may receive the first training termination parameter from the first device. This implementation is flexible and has strong adaptability.

In a possible implementation, the method may further include: Before the second device receives the first training termination parameter from the first device, the second device determines a second training termination parameter for the AI/ML model, where the second training termination parameter includes one or more of the following parameters: a training error, a quantity of iteration times, training time, a status of a first resource, or target performance. The second device sends the second training termination parameter to the first device.

In a possible implementation, the method may further include: The second device receives, from the first device, training data used to train the AI/ML model.

In a possible implementation, the second device may perform training of the AI/ML model in the following manner: The second device performs training of the AI/ML model based on first data.

In a possible implementation, the first training termination parameter may further include the identifier of the AI/ML model and/or the type information of the AI/ML model. The type information of the AI/ML model indicates a type of the AI/ML model. The type of the AI/ML model may include one or more of coverage problem analysis, slice coverage problem analysis, paging optimization analysis, fault analysis, fault prediction analysis, end-to-end latency analysis, energy saving analysis, mobility analysis, network slice load analysis, network slice throughput analysis, key performance indicator anomaly analysis, or software upgrade analysis.

In a possible implementation, the first training termination parameter includes the training error and the type information of the AI/ML model, and the type information of the AI/ML model indicates that the type of the AI/ML model is coverage problem analysis. In this case, the training error is an error corresponding to a coverage problem. The coverage problem may include one or more of a weak coverage problem, an over coverage problem, an overshoot coverage problem, a coverage hole problem, or a pilot pollution problem. The error corresponding to the coverage problem includes one or more of an error of reference signal received power, an error of reference signal received quality, or an error of a signal to interference plus noise ratio.

In a possible implementation, the first training termination parameter includes the training error and the type information of the AI/ML model, and the type information of the AI/ML model indicates that the type of the AI/ML model is energy saving analysis. In this case, the training error includes an error of energy efficiency and/or an error of energy consumption.

For technical effects of the second aspect and the possible implementations of the second aspect, refer to the technical effects of the first aspect and the possible implementations of the first aspect. Details are not described herein again.

According to a third aspect, an embodiment of this application further provides a communication apparatus. The communication apparatus is configured to perform the method provided in any one of the first aspect or the possible implementations of the first aspect. The communication apparatus is, for example, a first device, or a functional module in a first device, for example, a baseband apparatus or a chip system. In a possible implementation, the communication apparatus includes the baseband apparatus and a radio frequency apparatus.

In another possible implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional unit, and the functional unit is referred to as the transceiver unit. The functional unit can implement the sending function and the receiving function. Alternatively, the sending unit and the receiving unit may be different functional units, and the transceiver unit is a general term for these functional units.

According to a fourth aspect, an embodiment of this application further provides a communication apparatus. The communication apparatus is configured to perform the method provided in any one of the second aspect or the possible implementations of the second aspect. The communication apparatus is, for example, a second device, or a functional module in a second device, for example, a baseband apparatus or a chip system. **In** a possible implementation, the communication apparatus includes the baseband apparatus and a radio frequency apparatus.

**In** another possible implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional unit, and the functional unit is referred to as the transceiver unit. The functional unit can implement the sending function and the receiving function. Alternatively, the sending unit and the receiving unit may be different functional units, and the transceiver unit is a general term for these functional units.

According to a fifth aspect, an embodiment of this application provides a communication system. The communication system may include the communication apparatus according to the third aspect and/or the communication apparatus according to the fourth aspect.

According to a sixth aspect, an embodiment of this application provides a communication apparatus. The communication apparatus includes at least one processor and a memory. The at least one processor is configured to execute instructions stored in the memory, so that the communication apparatus performs the method provided in any one of the first aspect or the possible implementations of the first aspect.

According to a seventh aspect, an embodiment of this application provides a communication apparatus. The communication apparatus includes at least one processor and a memory. The at least one processor is configured to execute instructions stored in the memory, so that the communication apparatus performs the method provided in any one of the second aspect or the possible implementations of the second aspect.

According to an eighth aspect, an embodiment of this application further provides a computer-readable storage medium. The computer-readable storage medium includes computer program instructions. When the computer program instructions are executed by a communication apparatus, the communication apparatus performs the method provided in any one of the first aspect or the possible implementations of the first aspect, or performs the method provided in any one of the second aspect or the possible implementations of the second aspect.

According to a ninth aspect, an embodiment of this application further provides a computer program product. The computer program product includes instructions. When the instructions are run by a computer device, the computer device is enabled to perform the method provided in any one of the first aspect or the possible implementations of the first aspect, or perform the method provided in any one of the second aspect or the possible implementations of the second aspect. According to a tenth aspect, an embodiment of this application further provides a chip. The chip is configured to read a computer program stored in a memory, to perform the method provided in any one of the first aspect or the possible implementations of the first aspect, or perform the method provided in any one of the second aspect or the possible implementations of the second aspect. According to an eleventh aspect, an embodiment of this application further provides a chip system. The chip system includes a processor, configured to support a computer device in implementing the method provided in any one of the first aspect or the possible implementations of the first aspect, or implementing the method provided in any one of the second aspect or the possible implementations of the second aspect.

In a possible design, the chip system further includes a memory, and the memory is configured to store a program and data that are necessary for the computer apparatus. The chip system may include a chip, or may include a chip and another discrete component.

For beneficial effects of any one of the third aspect to the eleventh aspect, refer to the beneficial effects of the first aspect or the second aspect. No repeated description is provided.

### BRIEF DESCRIPTION OF DRAWINGS

FIG. 1 is a diagram of an MnF entity according to an embodiment of this application;
FIG. 2 is a diagram of a service-based management architecture according to an embodiment of this application;
FIG. 3 is a diagram of an AI/ML architecture according to an embodiment of this application;
FIG. 4 is a diagram of triggering training of an AI/ML model according to an embodiment of this application;
FIG. 5 is another diagram of triggering training of an AI/ML model according to an embodiment of this application;
FIG. 6 is a schematic flowchart of a communication method according to an embodiment of this application;
FIG. 7 is a diagram of interaction between communication apparatuses according to an embodiment of this application;
FIG. 8 is a schematic flowchart of still another communication method according to an embodiment of this application;
FIG. 9 is still another diagram of interaction between communication apparatuses according to an embodiment of this application;
FIG. 10 is a schematic flowchart of yet another communication method according to an embodiment of this application;
FIG. 11 is yet another diagram of interaction between communication apparatuses according to an embodiment of this application;
FIG. 12 is a diagram of a structure of a communication apparatus according to this application; and
FIG. 13 is a diagram of a structure of another communication apparatus according to this application.

### DESCRIPTION OF EMBODIMENTS

To make objectives, technical solutions, and advantages of embodiments of this application clearer, the following further describes embodiments of this application in detail with reference to the accompanying drawings.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

In embodiments of this application, "a plurality of" means two or more. In view of this, in embodiments of this application, "a plurality of" may also be understood as "at least two". "At least one" may be understood as one or more, for example, understood as one, two, or more. For example, "including at least one" means "including one, two, or more", and there is no limitation on which is included. For example, "including at least one of A, B, and C" may mean "including A, B, or C", "including A and B, A and C, or B and C", or "including A, B, and C". The term "and/or" describes an association relationship between associated objects and represents that three relationships may exist. For example, A and/or B may represent the following three cases: Only A exists, both A and B exist, and only B exists. In addition, the character "/" generally indicates an "or" relationship between the associated objects, unless otherwise stated. For example, "AI/ML" in embodiments of this application may alternatively be "AI or ML". The terms "system" and "network" may be used interchangeably in embodiments of this application. The terms "according to" and "based on" may be used interchangeably in embodiments of this application.

Unless otherwise specified, ordinal numbers such as "first" and "second" in embodiments of this application are used to distinguish between a plurality of objects, and are not intended to limit a sequence, a time sequence, priorities, or importance degrees of the plurality of objects. For example, a first device, a second device, and a third device in embodiments of this application are used to distinguish among the three devices, and do not limit priorities, importance degrees, or the like of the three devices.

In addition, in embodiments of this application, the term "example" is used to represent giving an example, an illustration, or a description. Any embodiment or design scheme described as an "example" in this application should not be explained as being more preferred or having more advantages than another embodiment or design scheme. Specifically, the term "example" is used to present a concept in a specific manner.

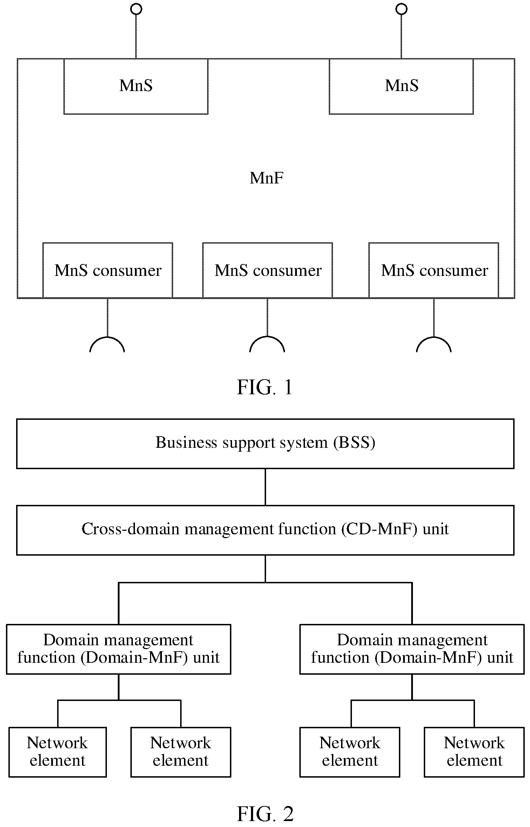

Embodiments of this application may be applied to various mobile communication systems, for example, a new radio (new radio, NR) system, a long term evolution (long term evolution, LTE) system, an advanced long term evolution (advanced long term evolution, LTE-A) system, a future communication system, or another communication system. This is not limited in embodiments of this application. For example, embodiments in this application may be applied to an NR network management architecture. The NR network management architecture may include a management function (management function, MnF). The MnF is a management entity defined by the 3rd generation partnership project (3rd generation partnership project, 3GPP). Externally visible behavior and interfaces of the MnF are defined as management services (management services, MnSs). In a service-providing management architecture, the MnF can act as an MnS producer (producer) or an MnS consumer (consumer). An MnS produced by the MnS producer of the MnF may have a plurality of MnS consumers. The MnF may consume a plurality of management services from one or more management service producers. As shown in FIG. 1, the MnS provided by the MnF may be used to provide a service for another MnF (for example, denoted as an MnF #A). In this case, the MnF may be used as an MnS producer, and the MnF #A may be used as an MnS consumer. In addition, the MnF may further obtain, from another MnF (denoted as an MnF #B, which may be the same as or different from the MnF #A), a service provided by the MnF #B. In other words, in this case, the MnF shown in FIG. 1 may be used as an MnS consumer, and the MnF #B is used as an MnS producer. In other words, a same MnF may be used as an MnS consumer or an MnS producer.

It should be understood that a graph of a circle or a graph of an arc shown in FIG. 1 may represent a service-based interface.

FIG. 2 is a diagram of a service-based management architecture to which an embodiment of this application is applicable. The service-based management architecture includes a business support system (business support system, BSS), a cross-domain management function (cross-domain management function, CD-MnF) unit, a domain management function (domain management function, Domain-MnF), and a network element (net element, NE). In FIG. 2, two domain management function units and four network elements are used as an example.

If an MnS is an MnS provided by the cross-domain management function unit, the cross-domain management function unit is an MnS producer, and the business support system is an MnS consumer. If an MnS is an MnS provided by the domain management function unit, the domain management function unit is an MnS producer, and the cross-domain management function unit is an MnS consumer. If an MnS is an MnS provided by the network element, the network element is an MnS producer, and the domain management function unit is an MnS consumer. It should be understood that the MnS producer and the MnS consumer may alternatively be deployed in one entity, for example, deployed in the business support system, the cross-domain management function unit, the domain management function unit, or the network element.

In this embodiment of this application, the cross-domain management function unit may be configured to manage one or more domain management function units. The domain management function unit may be configured to manage one or more network elements. The following briefly describes these units.
(1) The business support system is a communication service (communication service) oriented system, and is configured to provide functions and MnSs such as charging, settlement, accounting, customer service, business, network monitoring, communication service life cycle management, and service intent translation. The business support system may be an operator operation system or a vertical industry operation system (vertical OT system).
(2) The cross-domain management function unit may be a network management entity such as a network management function (network management function, NMF) unit, a network function management service consumer (network function management service consumer, NFMS_C), an MnS producer, an MnS consumer, or a management data analytics (management data analytics, MDA) consumer. The cross-domain management function unit provides one or more of the following management functions or MnSs: life cycle management of a network, deployment of a network, fault management of a network, performance management of a network, configuration management of a network, assurance of a network, an optimization function of a network, translation of a network intent from a service producer (intent from communication service provider, intent-CSP), and the like.

It should be understood that the "intent" in this embodiment of this application may be understood as an expectation for an intent producer (for example, the network element) and a system (for example, a network or a sub-network) in which the intent producer is located, and may include a requirement, a target, a constraint, or the like. Translation of the intent is a process of determining a policy for the intent. For example, the policy may be a condition indicating that the intent is not satisfied. For example, when the intent is energy saving, a policy A may be: When power consumption is greater than a first threshold, the power consumption is abnormal (that is, no energy is saved); and a policy B may be: When power consumption is greater than a second threshold, the power consumption is abnormal (that is, no energy is saved). It may be understood that even for a same intent, solutions that can satisfy the intent and that are determined by using different policies may be different.

The network indicated by the management function or the MnS may include one or more network elements or sub-networks, or may be a network slice. In other words, the network management function unit may be a network slice management function (network slice management function, NSMF) unit, a cross-domain management data analytical function (management data analytical function, MDAF) unit, a cross-domain self-organizing network function (self-organizing network function, SON Function), or a cross-domain intent management function (intent driven management service, intent driven MnS) unit.

Optionally, in some deployment scenarios, the cross-domain management function unit may further provide life cycle management of a sub-network, deployment of a sub-network, fault management of a sub-network, performance management of a sub-network, configuration management of a sub-network, assurance of a sub-network, an optimization function of a sub-network, translation of a network intent from a service producer of a sub-network (intent-CSP), translation of a network intent from a service consumer of a sub-network (intent from communication service consumer, intent-CSC), or the like. The sub-network herein includes a plurality of small sub-networks, and may be a network slice sub-network.

(3) The domain management function unit may be an element management entity such as an NMF, an element management system (element management system, EMS), a network function management service provider (network function management service provider, NFMS_P), a make before break automation engine (make before break automation engine, MAE), an MnS producer, an MnS consumer, or an MDA producer.

The domain management function unit may provide one or more of the following management functions or MnSs: life cycle management of a sub-network or a network element, deployment of a sub-network or a network element, fault management of a sub-network or a network element, performance management of a sub-network or a network element, assurance of a sub-network or a network element, an optimization function of a sub-network or a network element, translation of an intent from a sub-network or a network element (intent from network operator, intent-NOP), or the like. The sub-network herein includes one or more network elements. The sub-network may alternatively include a sub-network, in other words, one or more sub-networks form a larger sub-network.

Optionally, the sub-network herein may alternatively be a network slice sub-network. A domain management system may be a network slice sub-network management function (network slice subnet management function, NSSMF) unit, a domain management data analytical function (management data analytical function, domain MDAF) unit, a domain self-organizing network function (self-organizing network function, SON Function), a domain intent management function unit, or the like.

The domain management function unit may be classified in the following manners, including:
By network type, the domain management function unit may be classified as a radio access network (radio access network, RAN) domain management function unit (RAN domain management function, RAN domain MnF), a core network domain management function unit (core network domain management function, CN domain MnF), and transport network domain management function unit (transport network domain management function, TN domain MnF), or the like. It should be noted that the domain management function unit may alternatively be a domain network management system, and may manage one or more of an access network, a core network, or a transport network. The transport network is a network used to provide signal transmission and conversion, and is a basic network of a switching network, a data network, and a support network.

By administrative region, the domain management function unit may be classified as a domain management function unit of a region, for example, a domain management function unit of a city A or a domain management function unit of a city B.

(4) The network element is an entity that provides a network service, and includes a core network element, a radio access network element, a transport network element, or the like. For example, in the architecture shown in FIG. 2, the domain management function unit may include a radio access network domain management function unit, a core network element domain management function unit, or a transport network domain management function unit. The radio access network domain management function unit may be configured to manage the radio access network element. The core network element domain management function unit may be configured to manage the core network element. The transport network element management function unit may be configured to manage the transport network element.

For example, the core network element may include but is not limited to an access and mobility management function (access and mobility management function, AMF) network element, a session management function (session management function, SMF) network element, a policy control function (policy control function, PCF) network element, a network data analytics (network data analytical function, NWDAF) network element, a network repository function (network repository function, NRF) network element, a gateway, and the like.

The radio access network element may include but is not limited to various types of base stations (for example, a next generation NodeB (generation NodeB, gNB) and an evolved NodeB (evolved NodeB, eNB)), a central control unit (central unit control panel, CUCP), a central unit (central unit, CU), a distributed unit (distributed unit, DU), a central unit user plane (central unit user panel, CUUP), and the like.

It should be understood that the network function in this embodiment of this application is also referred to as a network element, an entity, or the like.

The network element may provide one or more of the following management functions or MnSs: life cycle management of the network element, deployment of the network element, fault management of the network element, performance management of the network element, assurance of the network element, an optimization function of the network element, translation of an intent from the network element, and the like.

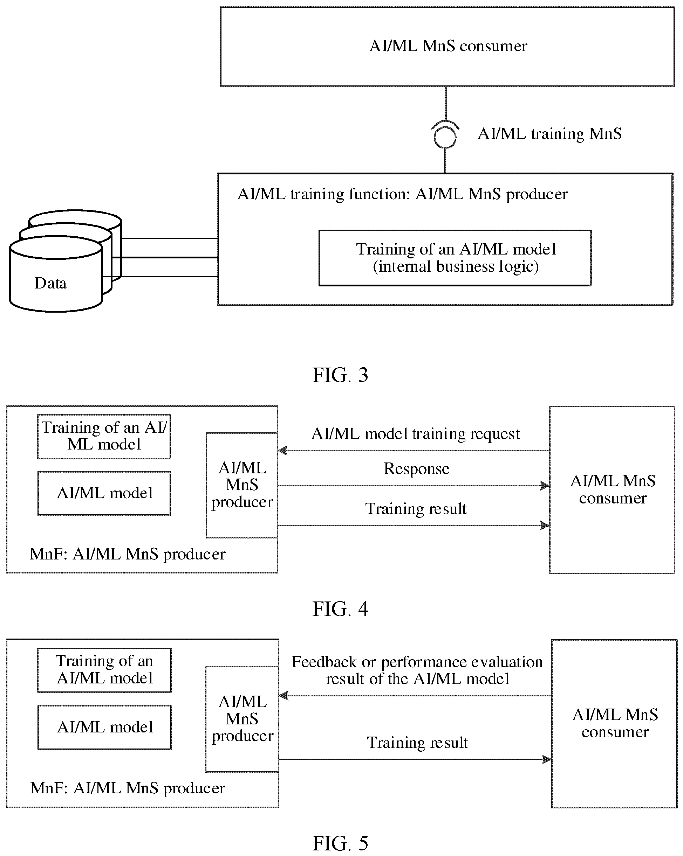

AI/ML technologies and related applications are increasingly widely used in industries, such as an MDAS (for example, MDA), a network data analytics service (for example, an NWDAF), image processing, and natural language processing. FIG. 3 is a diagram of an AI/ML architecture applicable to an embodiment of this application. In the AI/ML architecture, an MnS producer is an AI/ML MnS producer (AI/ML MnS producer), an MnS consumer is an AI/ML MnS consumer (AI/ML MnS consumer), and an MnS interface is an AI/ML training MnS interface or an AI/ML MnS interface. In FIG. 3, the AI/ML training MnS interface is used as an example.

The MDAS is a management service with an MDA capability. An MDAS producer (MDAS producer) may be configured to output analysis reports to an MDAS consumer (MDAS consumer) in different scenarios such as coverage problem analysis, fault event analysis, or mobility management analysis. Different ML models may be used in different scenarios to obtain the analysis reports. MDA has a capability of providing and analyzing raw data related to network and service events and statuses, and can provide analysis reports, to implement necessary operations for network and service operation.

The AI/ML MnS producer in this embodiment of this application may also be referred to as an AI/ML model MnS producer (AI/ML model MnS producer), an AI/ML model training MnS producer (AI/ML model training MnS producer), an AI/ML model training producer, or the like. Similarly, the AI/ML MnS consumer in this embodiment of this application may also be referred to as an AI/ML model MnS consumer (AI/ML model MnS consumer), an AI/ML model training MnS consumer (AI/ML model training MnS consumer), an AI/ML model training consumer, or the like.

FIG. 2 is used as an example. If an AI/ML MnS is an MnS provided by the cross-domain management function unit, the cross-domain management function unit is an AI/ML MnS producer, and the business support system is an AI/ML MnS consumer. If an AI/ML MnS is an MnS provided by the domain management function unit, the domain management function unit is an AI/ML MnS producer, and the cross-domain management function unit is an AI/ML MnS consumer. If an AI/ML MnS is an MnS provided by the network element, the network element is an AI/ML MnS producer, and the domain management function unit is an AI/ML MnS consumer. It should be understood that the AI/ML MnS producer and the AI/ML MnS consumer may alternatively be deployed in a same entity, for example, deployed in the business support system, the cross-domain management function unit, the domain management function unit, or the network element.

The AI/ML MnS producer may train an AI/ML model, and may provide a training result of the AI/ML model for an authorized AI/ML MnS consumer. For example, the AI/ML MnS producer may perform training of the AI/ML model based on training data, to obtain the training result of the AI/ML model. Optionally, the AI/ML MnS producer may send the training result of the AI/ML model to the AI/ML MnS consumer through the AI/ML training MnS interface (or the AI/ML MnS interface or the like). Training of the AI/ML model is an internal business logic (internal business logic) implementation process of the AI/ML MnS producer. In this embodiment of this application, the training result of the AI/ML model may also be referred to as a training result.

Training of the AI/ML model in this embodiment of this application may include training of an application (application, APP), or in other words, the AI/ML model may include the application. Training of the AI/ML model may also be referred to as AI/ML training (AI/ML training), AI/ML application training (AI/ML application training, AI/ML APP training), or the like.

It should be understood that a line segment that includes a graph including a circle and an arc shown in FIG. 3 may represent a service-based interface.

Currently, there may be two trigger (trigger) modes for training of the AI/ML model. It should be understood that triggering in this embodiment of this application may alternatively be initiation, starting, starting to perform, or the like.

One trigger mode for training of the AI/ML model is triggering by the AI/ML MnS consumer, as shown in FIG. 4. In FIG. 4, training of the AI/ML model may be triggered by an AI/ML model training request from one or more AI/ML MnS consumers. Optionally, the AI/ML MnS consumer may provide a data source (data source) as the training data for training the AI/ML model. The AI/ML MnS producer may return a response (response) to the AI/ML MnS consumer to notify the AI/ML MnS consumer whether the training request has been accepted.

The other trigger mode for training of the AI/ML model is that the AI/ML MnS producer actively triggers training of the AI/ML model based on a feedback received from the AI/ML MnS consumer or a performance evaluation result of the AI/ML model, as shown in FIG. 5. Alternatively, when there is an updated network status or updated training data is available, the AI/ML MnS producer triggers training of the AI/ML model.

In addition, as shown in FIG. 4 or FIG. 5, the AI/ML MnS producer completes training of the AI/ML model, and may obtain the training result of the AI/ML model. The AI/ML MnS producer may send the training result to the AI/ML MnS consumer.

The feedback (not shown in FIG. 5) received by the AI/ML MnS producer from the AI/ML MnS consumer is also referred to as a feedback report, and may include type information of the AI/ML model and precision information of the AI/ML model, or indicates whether a trained AI/ML model is used, or the like. For example, the precision information of the AI/ML model included in the feedback may indicate precision determined in a process of using the AI/ML model. If the precision of the AI/ML model is not high (for example, lower than a precision threshold), the AI/ML MnS producer may initiate training of the AI/ML model.

It should be understood that the precision of the AI/ML model may be a quantity of true positives (true positives, TPs) divided by a sum of the quantity of true positives and a quantity of false positives (false positives, FPs).

In explanations of the quantity of true positives and the quantity of false positives, the quantity of true positive is a quantity of times that the AI/ML model recognizes positive data in test data as positives, and the quantity of false positive is a quantity of times that the AI/ML model incorrectly recognizes negative data in the test data as positives. For example, the precision is 90%, or the precision may be represented by a decimal, for example, the precision is 0.9. If a positive is one type of recognition result in a plurality of types of possible recognition results of the AI/ML model, and another type of recognition result is a negative, the positive data is data whose recognition result should be a positive, and the positive data is data whose recognition result should be a negative. For example, a positive integer and a non-positive integer are two types of recognition results of the AI/ML model. It is assumed that the positive integer is a positive, and the non-positive integer is a negative. For example, the positive data includes 1, and the negative data includes 0. When the AI/ML model recognizes 1 as a positive integer, the quantity of true positives is increased by 1. When the AI/ML model recognizes 0 as a positive integer, the quantity of false positives is increased by 1.

In another explanation of the quantity of true positives and the quantity of false positives, the AI/ML model may be used to recognize whether data meets a requirement. If a piece of to-be-recognized data should be recognized as meeting the requirement, and the data is actually recognized as meeting the requirement in a process in which the AI/ML model recognizes the data, the quantity of true positives of the AI/ML model is increased by 1. If a piece of to-be-recognized data should be recognized as meeting a requirement, but the data is actually recognized as not meeting the requirement in a process in which the AI/ML model recognizes the data, the quantity of false positives of the AI/ML model is increased by 1.

The performance evaluation result of the AI/ML model received by the AI/ML MnS producer from the AI/ML MnS consumer may be used to measure performance of the AI/ML model. If the performance evaluation result of the AI/ML model indicates that the performance of the AI/ML model is poor (for example, time consumed for each calculation of the AI/ML model exceeds a requirement, or a calculation error in a process of using the AI/ML model exceeds an error threshold), the AI/ML MnS producer may trigger training of the AI/ML model. Optionally, the feedback may further include the performance evaluation result of the AI/ML model.

The updated network status may be a changed network status. It may be understood that because a network status change may cause a change in the training data for training of the AI/ML model, when the network status is updated, the AI/ML MnS producer may trigger training of the AI/ML model. In this embodiment of this application, the updated network status may also be referred to as a new network status. The updated network status may include, for example, that several cells enter an energy saving state, or transmit power of some cells is adjusted. However, this is not limited in this embodiment of this application.

The updated training data may be specifically data whose parameters such as data distribution and a data value change, or may be data that changes due to a network status change or the like. In this embodiment of this application, the updated training data may also be referred to as new training data. The updated training data may be data obtained from an external server such as a 5G core network, or an application program such as another external application (application, APP). This is not specifically limited in this embodiment of this application.

As described above, the AI/ML MnS producer, as a training party of the AI/ML model, may initiate training of the AI/ML model in response to a request message from the AI/ML MnS consumer, or may actively initiate training of the AI/ML model. However, there is no related solution for how the AI/ML MnS producer terminates training of the AI/ML model.

In view of this, embodiments of this application provide a communication method and apparatus. In the method, a first device determines a first training termination parameter for an AI/ML model, where the first training termination parameter may include one or more of a training error, a quantity of iteration times, training time, a status of a first resource, or target performance; and sends the first training termination parameter to a second device configured to train the AI/ML model. In this way, the second device can terminate training of the AI/ML model based on the first training termination parameter in a process of training the AI/ML model, implementing termination of training of the AI/ML model.

In embodiments of this application, the first device may be an AI/ML MnS consumer, or a component (for example, a chip or a chip system) in an AI/ML MnS consumer. The second device may be an AI/ML MnS producer, or a component (for example, a chip or a chip system) in an AI/ML MnS producer. The first device and the second device may be deployed in different entities, or may be deployed in a same entity, as shown in FIG. 1. For ease of understanding embodiments of this application, an example in which the first device and the second device are deployed in different entities is used below.

If the first device is the business support system in FIG. 2, the second device may be the cross-domain management function unit in FIG. 2. If the first device is the cross-domain management function unit in FIG. 2, the second device may be the domain management function unit in FIG. 2. If the first device is the domain management function unit in FIG. 2, the second device may be the network element in FIG. 2. For descriptions of the business support system, the cross-domain management function unit, the domain management function unit, and the network element, refer to the related content of FIG. 2. Details are not described herein again.

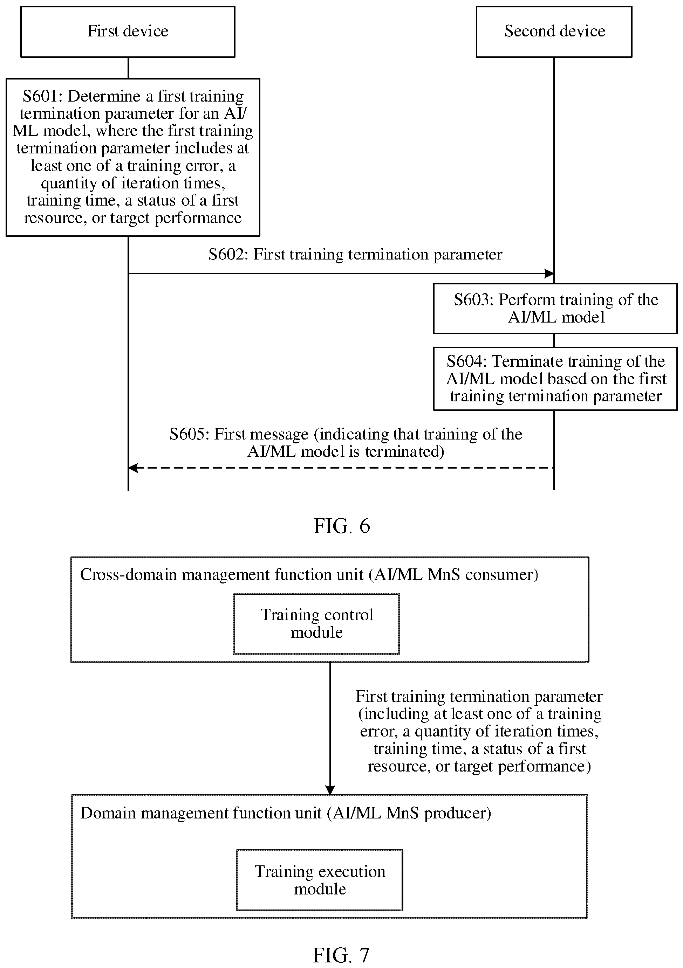

FIG. 6 is a schematic flowchart of a communication method according to an embodiment of this application. As shown in FIG. 6, the method may include the following content.

S601: A first device determines a first training termination parameter for an AI/ML model.

The first training termination parameter is used to terminate training of the AI/ML model. The first training termination parameter may include one or more of the following parameters: a training error (training error), a quantity of iteration times (iteration times), training time (training time), a status of a first resource, or target performance (target performance). The training error may be a difference between a predicted value inferred by the AI/ML model and a real value for inference of the AI/ML model. The first resource is a resource related to training of the AI/ML model. For example, the first resource may include but is not limited to a CPU resource, a storage resource, or a network resource. For example, the target performance may include but is not limited to one or more of parameters used to measure performance of the AI/ML model, such as accuracy, precision, or an F1 score.

The first training termination parameter may be understood as a condition for terminating training of the AI/ML model. For example, if a parameter in a training process of the AI/ML model satisfies any parameter in the first training termination parameter, training of the AI/ML model is terminated. In addition, the training termination parameter in this embodiment of this application may also be referred to as a termination parameter, a training parameter, or the like.

The training error in the first training termination parameter may be understood as a training error threshold for the AI/ML model. If a training error of the AI/ML model in the training process of the AI/ML model is less than or equal to the training error in the first training termination parameter, training of the AI/ML model is terminated. In other words, in the training process of the AI/ML model, if the difference (or an average error) between the predicted value inferred by the AI/ML model and the real value for inference of the AI/ML model is less than or equal to the training error in the first training termination parameter, training of the AI/ML model is terminated.

The real value is data in a normal network. The data in the normal network may be referred to as a sample. Further, the AI/ML model may be obtained through training with the data (that is, the data in the normal network), and then changed data is input to the AI/ML model based on a network status change. A predicted network status output by the AI/ML model is the predicted value. For example, an AI/ML model obtained through training based on a sample *g*(*x*) is denoted as y = *a*(*x*), where *x* is an input, and y is an output. In this case, the sample *g* herein is a real value, and y is a predicted value. The training error of the AI/ML model is a difference between the real value and the predicted value. In addition, when the training error of the AI/ML model is less than or equal to a value, it is considered that the AI/ML model has converged.

The quantity of iteration times in the first training termination parameter may be understood as a quantity of iteration times threshold for the AI/ML model. If a quantity of iteration times of the AI/ML model in the training process of the AI/ML model is equal to the quantity of iteration times in the first training termination parameter, training of the AI/ML model is terminated. For example, the quantity of iteration times in the first training termination parameter is 1000. If the quantity of iteration times of the AI/ML model in the training process of the AI/ML model is equal to 1000, training of the AI/ML model is terminated.

The training time in the first training termination parameter may be understood as a training time threshold for the AI/ML model. If training time of the AI/ML model in the training process of the AI/ML model is equal to the training time in the first training termination parameter, training of the AI/ML model is terminated. For example, the training time in the first training termination parameter is 120 minutes. If the training time of the AI/ML model in the training process of the AI/ML model is equal to 120 minutes, training of the AI/ML model is terminated.

The status of the first resource in the first training termination parameter may be understood as a status threshold for the first resource in the training process of the AI/ML model. If a status of the first resource in the training process of the AI/ML model satisfies the status of the first resource in the first training termination parameter, training of the AI/ML model is terminated. For example, the status of the first resource in the first training termination parameter is that training of the AI/ML model occupies 50% of the storage resource. If training of the AI/ML model occupies 50% of the storage resource, training of the AI/ML model is terminated. As described above, the first resource may include but is not limited to at least one of the CPU resource, the storage resource, or the network resource. When the first resource includes a plurality of resources, in the training process of the AI/ML model, if any one of the plurality of resources satisfies a status of the corresponding resource in the first training termination parameter, training of the AI/ML model is terminated.

The target performance in the first training termination parameter may be understood as a performance threshold for the AI/ML model. If performance of the AI/ML model in the training process of the AI/ML model satisfies (or is equal to) the target performance in the first training termination parameter, training of the AI/ML model is terminated. For example, the target performance in the first training termination parameter is 90% accuracy. If accuracy of the AI/ML model in the training process of the AI/ML model is greater than or equal to 90%, training of the AI/ML model is terminated. As described above, the target performance may include but is not limited to at least one of the accuracy, the precision, or the F1 score. When the target performance includes a plurality of performance parameters, if the performance of the AI/ML model satisfies any performance parameter in the target performance, training of the AI/ML model is terminated. In this embodiment of this application, the first device may determine the first training termination parameter for the AI/ML model. For example, the first device may determine the first training termination parameter in response to a request message that is from a second device and that is used to request to obtain a training termination parameter for the AI/ML model. Alternatively, the first device may actively determine the first training termination parameter for the AI/ML model. For example, the first device has a requirement for obtaining a training result of the AI/ML model, and the first device may determine the first training termination parameter for the AI/ML model. It should be understood that a trigger condition for determining the first training termination parameter by the first device is not limited in this embodiment of this application.

For example, the first device may determine the first training termination parameter for the AI/ML model based on a requirement (for example, an application scenario or a performance requirement) of the AI/ML model, a historical training parameter of the AI/ML model, and/or the like. Alternatively, the first device may determine the first training termination parameter for the AI/ML model based on an external input. It should be understood that a specific implementation process in which the first device determines the first training termination parameter is not limited in this embodiment of this application.

For descriptions of the first device and the second device, refer to the foregoing related content. Details are not described herein again. The AI/ML model in this embodiment of this application may be specific to one or more specific analysis scenarios (or referred to as scenarios).

In a possible implementation, the first training termination parameter may further include an identifier of the AI/ML model, or include type information of the AI/ML model, or include an identifier of the AI/ML model and type information of the AI/ML model. The identifier of the AI/ML model may identify the AI/ML model. The type information of the AI/ML model may indicate a type of the AI/ML model. The type of the AI/ML model may be understood as the application scenario of the AI/ML model. In this way, the first device may clearly indicate the AI/ML model to which the first training termination parameter is applied and the application scenario of the AI/ML model.

For example, the type of the AI/ML model may include but is not limited to one or more of the following types:
coverage problem analysis (coverage problem analysis), used to analyze a coverage problem such as weak coverage, over coverage, and overshoot coverage, and provide an analysis result for the coverage problem;
energy saving analysis (energy saving analysis), used to analyze energy consumption and energy efficiency problems of a RAN or a CN, to reduce energy consumption of the network and improve energy efficiency;
slice coverage problem analysis (slice coverage analysis), used to analyze slice coverage, slice availability, slice prediction information, and the like;
paging optimization analysis (paging optimization analysis), used to analyze paging data of a user and optimize a paging process on a current network;
fault analysis (alarm incident analysis), used to analyze a network alarm, a fault, or an event and provide a solution;
fault prediction analysis (fault prediction analysis), used to analyze and predict a potential network fault and provide a solution;
end-to-end (end-to-end, E2E) latency analysis (latency analysis), used to analyze, for example, a RAN latency problem, a CN latency problem, a transport network (transport network, TN) latency problem, a user equipment (user equipment, UE) latency problem, and a service provider latency problem, to support service level specification (service level specification, SLS) assurance;
mobility analysis (mobility performance analysis), used to analyze network mobility performance such as premature handover and delayed handover, to improve a network handover success rate;
network slice load analysis (network slice load analysis), used to analyze deterioration of a performance policy and a key performance indicator (key performance indicator, KPI) caused by a load problem (such as radio resource utilization), to further provide a suggestion for a network slice load problem;
network slice throughput analysis (network slice throughput analysis), used to analyze and predict a throughput of a network slice, to improve or ensure a network throughput;

KPI anomaly analysis (KPI anomaly analysis), used to analyze cross-domain and single-domain KPIs to identify a root cause and provide a rectification suggestion, where the root cause is a cause of a KPI anomaly, for example, the root cause includes a parameter configuration anomaly, a software anomaly, a hardware device anomaly, or an increase in a service requirement; or
RAN software upgrade (RAN node software upgrade) analysis, used to analyze and optimize time for software upgrade of a RAN node, where expected impact is small or expected operation costs and a data loss are small within the time, so that service interruption is avoided, and operation costs are saved, in other words, by using radio access network node software upgrade analysis, software upgrade can be automatically started at better time when the expected operation costs and the data loss are small.

For the foregoing types, refer to descriptions in Chapter 7 in 3GPP TS28.104 V17.1.1 and Chapter 6 in the technical report (technical report, TR) 28.809 V17.0.0. Details are not described herein again.

Coverage problem analysis is used as an example. Training of the AI/ML model may be used to assist in analysis of the coverage problem. Optionally, training of the AI/ML model may provide analysis of a coverage problem of a first region. The first region may also be referred to as an analysis region. For example, the first region may include a specific region (for example, a geographical location region), a region in which a specific cell is located, or a region in which a specific base station is located, or may include a plurality of specific regions, or regions in which specific cells or a plurality of specific base stations are located. This is not limited in this embodiment of this application. For example, the coverage problem may include but is not limited to a weak coverage problem, an over coverage problem, an overshoot coverage problem, a coverage hole problem, or pilot pollution. In this case, training data for the AI/ML model (the training data for the AI/ML model is referred to as first data below) may be a parameter corresponding to the first region.

For example, the parameter corresponding to the first region may include but is not limited to one or more of the following parameters: reference signal received power (reference signal received power, RSRP), reference signal received quality (reference signal received quality, RSRQ), or a signal to interference plus noise ratio (signal to interference plus noise ratio, SINR) of a user in the first region.

Energy saving analysis is used as an example. Training of the AI/ML model may be used to assist in analysis of an energy saving problem (for example, an energy efficiency problem and/or an energy consumption problem). Optionally, training of the AI/ML model may provide analysis of an energy saving problem of a second region. The second region may also be referred to as an analysis region. For example, the second region may include a specific region (for example, a geographical location region), a region in which a specific cell is located, a region in which a specific core network element is located, or a region in which a specific base station is located, or may include a plurality of specific regions, or regions in which a plurality of specific cells, a plurality of specific core network elements, or a plurality of specific base stations are located. This is not limited in this embodiment of this application. For example, the energy saving problem may include but is not limited to an energy efficiency problem or an energy consumption problem. In this case, first data may include but is not limited to the following data: a cell load of the second region, a handover policy of a cell in the second region, a carrier shutdown policy of the cell in the second region, user traffic distribution of the second region, an energy efficiency value of a core network element corresponding to the second region, an energy consumption value of the core network element corresponding to the second region, an energy efficiency value of a base station corresponding to the second region, or an energy consumption value of the base station corresponding to the second region.

It should be understood that one type of the AI/ML model may correspond to one or more AI/ML models. For example, coverage problem analysis corresponds to a plurality of AI/ML models, and the plurality of AI/ML models perform coverage problem analysis together. In this case, the first training termination parameter may include identifiers of the plurality of AI/ML models. In addition, the first training termination parameter may be applied to a plurality of AI/ML models of one type of the AI/ML model. In another possible implementation, a plurality of AI/ML models of one type of the AI/ML model correspond to different training termination parameters, and in this case, the first device may determine a plurality of groups of training termination parameters for a plurality of AI/ML models for a type of the AI/ML model.

As described above, the training error may be the difference between the predicted value inferred by the AI/ML model and the real value for inference of the AI/ML model. Therefore, when the type of the AI/ML model is coverage problem analysis, the training error may be an error corresponding to the coverage problem. For example, the error corresponding to the coverage problem may include but is not limited to an error of the RSRP, an error of the RSRQ, or an error of the SINR.

The RSRP is used as an example. An input sample (that is, the first data) of the AI/ML model may be a ratio of a coverage problem (for example, a percentage of a weak coverage problem, a percentage of an overshoot coverage problem, a percentage of a coverage hole problem, or a percentage of a pilot pollution problem) corresponding to the RSRP of a cell in the first region. The ratio of the coverage problem may be data obtained through statistics collection at a grid granularity of the first region, or may be data obtained through statistics collection at a user granularity of the first region. It is assumed that an AI/ML model obtained through training based on the data is y₁ *= a*(*x*)*,* and a training error of the AI/ML model is a difference between a predicted value of the ratio of the coverage problem of the first region and a real value of the ratio of the coverage problem of the first region. Further, if RSRP of a user (or a grid) in a specific region and a ratio of a coverage problem of the specific region, that is, a real value of the input sample, are input to y₁ *= a*(*x*)*,* y₁ *= a*(*x*) may output a predicted value of the ratio of the coverage problem of the specific region, and a difference between the real value and the predicted value is an error of the RSRP. The RSRP may alternatively be: RSRQ; an SINR; the RSRP and RSRQ; RSRP and an SINR; RSRQ and an SINR; the RSRP, RSRQ and an SINR; or the like. A specific implementation process is not described herein again.

When the type of the AI/ML model is energy saving analysis, the training error includes an error of energy efficiency, or includes an error of energy consumption, or includes an error of energy efficiency and an error of energy consumption.

The energy efficiency is used as an example. An input sample (that is, the first data) of the AI/ML model may include at least one of a cell load of the second region, a handover policy of a cell in the second region, a carrier shutdown policy of the cell in the second region, user traffic distribution of the second region, an energy efficiency value of a core network element corresponding to the second region, or an energy efficiency value of a base station corresponding to the second region. It is assumed that an AI/ML model obtained through training based on the data is *y*₂ *= a*(*x*)*,* and a training error of the AI/ML model is an error of energy efficiency of the cell in the second region (or the base station or the core network element corresponding to the second region). Further, if a cell load of a specific region, a handover policy, a carrier shutdown policy, user traffic distribution, an energy efficiency value of a base station, or the like, that is, a real value of the input sample, is input to *y*₂ *= a*(*x*)*, y*₂ *= a*(*x*) may output a predicted value of energy efficiency of a cell in the specific region (or the base station or a core network element corresponding to the specific cell), and a difference between the real value and the predicted value is an error of the energy efficiency. The energy efficiency may alternatively be energy consumption, or the energy efficiency and energy consumption. A specific implementation process is not described herein again.

In a possible implementation, the first training termination parameter may further include version information of the AI/ML model, and the version information of the AI/ML model may indicate a version of the AI/ML model.

Table 1 shows an example of the first training termination parameter by using an example in which the first training termination parameter includes the identifier of the AI/ML model, the type information of the AI/ML model, the training error, the quantity of iteration times, the training time, the status of the first resource, and the target performance. It should be understood that the data in Table 1 is merely an example, and does not limit specific content of the first training termination parameter.

**Table 1**

| Parameter | Definition |
|---|---|
| Identifier of the AI/ML model | Identifying the AI/ML model |
| Version information of the AI/ML model | Indicating the version of the AI/ML model |
| Type information of the AI/ML model | Indicating the type of the AI/ML model, such as coverage problem analysis and energy saving analysis |
| Training error | Indicating the training error threshold for the AI/ML model, where if the training error of the AI/ML model is less than or equal to the training error threshold, training of the AI/ML model is terminated |
| Quantity of iteration times | Indicating the quantity of iteration times threshold for the AI/ML model, where if the quantity of iteration times of the AI/ML model is equal to the quantity of iteration times threshold, training of the AI/ML model is terminated |
| Training time | Indicating the training time threshold for the AI/ML model, where if the training time of the AI/ML model is equal to the training time threshold, training of the AI/ML model is terminated |
| Status of the first resource | Indicating the status threshold for the first resource during training of the AI/ML model, where if the status of the first resource during training of the AI/ML model satisfies the status threshold, training of the AI/ML model is terminated |
| Target performance | Indicating the performance threshold for training of the AI/ML model, where if the performance of the AI/ML model satisfies the performance threshold, training of the AI/ML model is terminated |

S602: The first device sends the first training termination parameter to the second device. Correspondingly, the second device receives the first training termination parameter from the first device.

In addition to at least one of a training error, a quantity of iteration times, training time, a status of a first resource, or target performance, the first training termination parameter may further include at least one of the identifier of the AI/ML model, the version information of the AI/ML model, or the type information of the AI/ML model. In another possible implementation, the first training termination parameter may not include the identifier of the AI/ML model, the version information of the AI/ML model, and the type information of the AI/ML model. For example, the first training termination parameter and the identifier of the AI/ML model (and/or the version information of the AI/ML model and/or the type information of the AI/ML model) are carried in one message. For example, the first device may send a second message to the second device. The second message not only includes the first training termination parameter, but also includes at least one of the identifier of the AI/ML model, the version information of the AI/ML model, and the type information of the AI/ML model.

S603: The second device performs training of the AI/ML model.

For example, the second device may perform training of the AI/ML model based on the first data. The first data may be from the first device, or a part of the first data is from the first device, or the first data is data of the second device, or the like. A source of the first data is not limited in this embodiment of this application. The second device may initiate training of the AI/ML model in response to a request message from the first device, as shown in FIG. 4. Alternatively, the second device may actively initiate training of the AI/ML model, as shown in FIG. 5. This is not limited in this embodiment of this application. In addition, an algorithm and a specific implementation process used by the second device to train the AI/ML model are not limited in this embodiment of this application.

S604: The second device terminates training of the AI/ML model based on the first training termination parameter.

The second device performs training of the AI/ML model, and terminates training of the AI/ML model. In an example, an anomaly occurs during training of the AI/ML model, and the second device terminates training of the AI/ML model, for example, training data is inadequate. In still another example, a training parameter of the AI/ML model satisfies the first training termination parameter, and the second device terminates training of the AI/ML model. In FIG. 6, an example in which the second device terminates training of the AI/ML model based on the first training termination parameter is used.

For example, the first training termination parameter includes the training error. In a process in which the second device performs training of the AI/ML model, when the training error of the AI/ML model is less than or equal to the training error in the first training termination parameter, the second device terminates training of the AI/ML model.

For example, the first training termination parameter includes the quantity of iteration times. In a process in which the second device performs training of the AI/ML model, when the quantity of iteration times of the AI/ML model is equal to the quantity of iteration times in the first training termination parameter, the second device terminates training of the AI/ML model.

For another example, the first training termination parameter includes the training time. In a process in which the second device performs training of the AI/ML model, when the training time of the AI/ML model is equal to the training time in the first training termination parameter, the second device terminates training of the AI/ML model.

For another example, the first training termination parameter includes the status of the first resource. In a process in which the second device performs training of the AI/ML model, when the first resource of the second device satisfies the status of the first resource in the first training termination parameter, the second device terminates training of the AI/ML model. The first resource may include one or more resources. When any resource in the first resource satisfies a status of the corresponding resource in the first training termination parameter in the training process of the AI/ML model, the second device terminates training of the AI/ML model.

For another example, the first training termination parameter includes the target performance. In a process in which the second device performs training of the AI/ML model, when the performance of the AI/ML model satisfies the target performance, the second device terminates training of the AI/ML model. The target performance parameter may include one or more performance parameters. When a performance parameter of the AI/ML model satisfies one performance parameter in the target performance parameter, the second device terminates training of the AI/ML model.

S605: The second device sends a first message to the first device. Correspondingly, the first device receives the first message from the second device.

S605 is an optional step, and is represented by a dashed line in FIG. 6. The second device may send the first message to the first device, where the first message indicates that training of the AI/ML model is terminated, so that the first device determines that training of the AI/ML model has been terminated.

In an example, the first message may include one or more of the following information: the identifier of the AI/ML model, the version information of the AI/ML model, the type information of the AI/ML model, the performance parameter of the AI/ML model, duration consumed for training the AI/ML model, a quantity of iteration times for training the AI/ML model, progress information, first estimated duration, or a first estimated quantity of iteration times. The progress information is a progress of completing training of the AI/ML model by the second device when the second device terminates training of the AI/ML model, or a progress of obtaining the training result of the AI/ML model by the second device, for example, 50% or 80%. The first estimated training duration is duration further needed by the second device to complete training of the AI/ML model when the second device terminates training of the AI/ML model, or training time further needed by the second device to obtain the training result of the AI/ML model when training of the AI/ML model is terminated. The first estimated quantity of iteration times is a quantity of iteration times further needed by the second device to complete training of the AI/ML model when the second device terminates training of the AI/ML model, or a quantity of iteration times further needed by the second device to obtain the training result of the AI/ML model when training of the AI/ML model is terminated.

The second device terminates training of the AI/ML model, and may obtain the training result, or may not obtain the training result. When not obtaining the training result, the second device may obtain at least one of the progress information, the first estimated duration, or the first estimated quantity of iteration times, and send at least one of the progress information, the first estimated duration, or the first estimated quantity of iteration times to the first device. In this way, the first device can adaptively adjust the training termination parameter, to reduce a problem that no training result is obtained due to inadequate training time, an inadequate iteration count, or the like. It should be understood that information such as the identifier of the AI/ML model, the type information of the AI/ML model, the version information of the AI/ML model, the performance parameter of the AI/ML model, the duration consumed for training the AI/ML model, the quantity of iteration times for training the AI/ML model, the progress information, the first estimated duration, and the first estimated quantity of iteration times may be carried in the first message, or may not be carried in the first message. This is not limited in this embodiment of this application. In addition, the information may implicitly indicate that training of the AI/ML model is terminated. To be specific, the second device may send, to the first device, at least one of the identifier of the AI/ML model, the type information of the AI/ML model, the performance parameter of the AI/ML model, the duration consumed for training the AI/ML model, the quantity of iteration times for training the AI/ML model, the progress information, the first estimated duration, or the first estimated quantity of iteration times, to indicate that training of the AI/ML model is terminated. In this way, the second device does not need to send additional indication information to the first device to indicate that training of the AI/ML model is terminated. Therefore, network resource utilization can be improved.

Table 2 shows an example of the first message by using an example in which the first message includes the identifier of the AI/ML model, the type information of the AI/ML model, the version information of the AI/ML model, the performance parameter of the AI/ML model, the duration consumed for training the AI/ML model, the quantity of iteration times for training the AI/ML model, the progress information, the first estimated duration, and the first estimated quantity of iteration times. It should be understood that the data in Table 2 is merely an example, and does not limit specific content of the first message.

**Table 2**

| Parameter | Definition |
|---|---|
| Identifier of the AI/ML model | Identifying the AI/ML model |
| Version information of the AI/ML model | Indicating the version of the AI/ML model |
| Type information of the AI/ML model | Indicating the type of the AI/ML model, such as coverage problem analysis and energy saving analysis |
| Performance parameter of the AI/ML model | Indicating the performance of the training result of the AI/ML model, such as the accuracy, the precision, or the F1 score |
| Duration consumed for training the AI/ML model | Indicating duration of training the AI/ML model |
| Quantity of iteration times for training the AI/ML model | Indicating the quantity of iteration times for training the AI/ML model |
| Progress information | Indicating the progress of obtaining the training result of the AI/ML model by the second device when the training of AI/ML model is terminated |
| First estimated duration | Indicating the training time further needed by the second device to obtain the training result of the AI/ML model when the training of AI/ML model is terminated |
| First estimated quantity of iteration times | Indicating the quantity of iteration times further needed by the second device to obtain the training result of the AI/ML model when the training of AI/ML model is terminated |

In an example, the second device may send cause information for terminating training of the AI/ML model to the first device. Correspondingly, the first device receives the cause information for terminating the AI/ML model training from the second device. The cause information for terminating training of the AI/ML model may indicate a training anomaly of the AI/ML model, for example, inadequate training data. Alternatively, the cause information for terminating training of the AI/ML model may indicate that the training parameter of the AI/ML model satisfies the first training termination parameter. It should be understood that a message carrying the cause information for terminating training of the AI/ML model may be the first message, or may not be the first message. In addition, the cause information for terminating training of the AI/ML model may implicitly indicate that training of the AI/ML model is terminated. To be specific, the second device may send the cause information for terminating training of the AI/ML model to the first device, to indicate that training of the AI/ML model is terminated. In this way, the second device does not need to send additional indication information to the first device to indicate that training of the AI/ML model is terminated. Therefore, the network resource utilization is improved. Optionally, if the cause information for terminating training of the AI/ML model indicates the training anomaly of the AI/ML model, and the training anomaly of the AI/ML model is inadequate training data for the AI/ML model, the first device may send, to the second device, training data used to train the AI/ML model, so that the second device has adequate training data, reducing a problem that training of the AI/ML model is abnormally terminated due to inadequate training data. Correspondingly, the second device receives, from the first device, the training data used to train the AI/ML model.

In a possible implementation, the second device terminates training of the AI/ML model, and obtains the training result of the AI/ML model. Further, the second device may send the training result to the first device. Correspondingly, the first device may receive the training result from the second device.

It should be understood that an execution sequence of the steps in FIG. 6 is merely an example, and this embodiment of this application is not limited thereto. For example, the second device may perform training of the AI/ML model after receiving the first training termination parameter. Alternatively, the second device may first perform training of the AI/ML model, and receive the first training termination parameter from the first device in the training process of the AI/ML model. In the foregoing embodiment of this application, the first device may send the first training termination parameter to the second device, so that the second device can terminate training of the AI/ML model based on the first training termination parameter, implementing termination of training of the AI/ML model. Therefore, the training process of the AI/ML model is not performed infinitely, and training efficiency of the AI/ML model is improved.

Based on a same technical concept, a training control module in an AI/ML MnS consumer may perform the steps performed by the first device in the procedure shown in FIG. 6, and a training execution module in an AI/ML MnS producer may perform the steps performed by the second device in the procedure shown in FIG. 6. For details, refer to the descriptions in the procedure shown in FIG. 6.

For example, as shown in FIG. 7, the AI/ML MnS consumer is a cross-domain management function unit, and the AI/ML MnS producer is a domain management function unit.

A training control module in the cross-domain management function unit may perform S601 and S602, that is, determine the first training termination parameter for the AI/ML model, and send the first training termination parameter to a training execution module in the domain management function unit.

The training execution module in the domain management function unit may perform S603 and S604, that is, perform training of the AI/ML model, and terminate training of the AI/ML model based on the first training termination parameter.

Optionally, the training execution module in the domain management function unit may further perform S605, that is, send the first message to the training control module in the cross-domain management function unit.

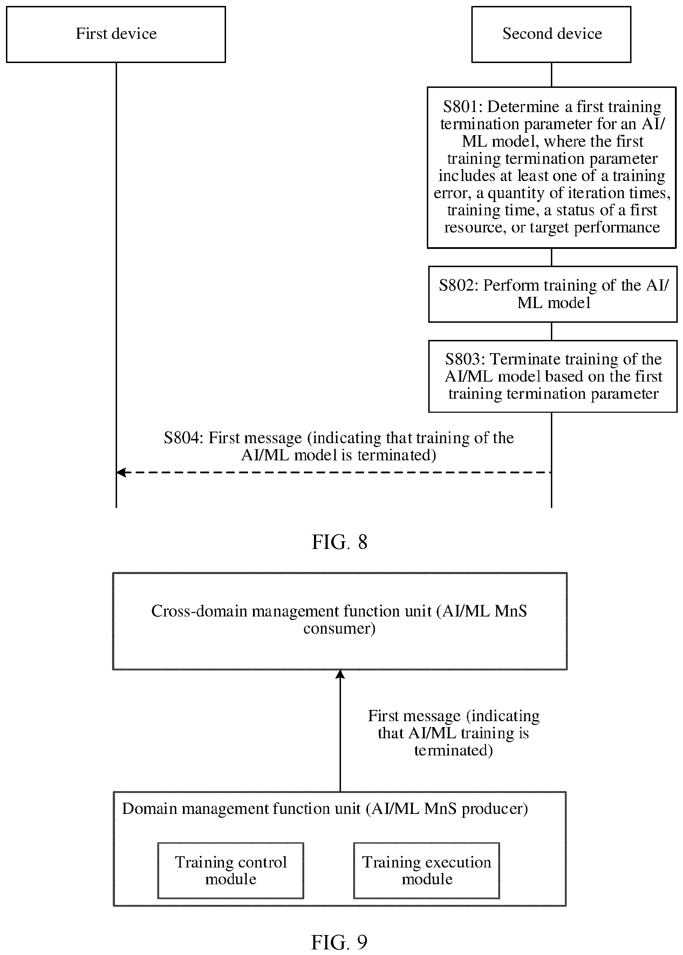

In the embodiment shown in FIG. 6, the first training termination parameter is determined by the first device. In another possible implementation, the first training termination parameter may alternatively be determined by the second device, as shown in FIG. 8.

FIG. 8 is a schematic flowchart of another communication method according to an embodiment of this application. As shown in FIG. 8, the method may include the following content.

S801: A second device determines a first training termination parameter for an AI/ML model.

The first training termination parameter may include one or more of the following parameters: a training error, a quantity of iteration times, training time, a status of a first resource, or target performance. For example, the target performance may include but is not limited to one or more of parameters used to measure performance of the AI/ML model, such as accuracy, precision, or an F1 score. The training error may be a difference between a predicted value inferred by the AI/ML model and a real value for inference of the AI/ML model. The first resource is a resource related to training of the AI/ML model. For example, the first resource may include but is not limited to a CPU resource, a storage resource, or a network resource. For example, the target performance may include but is not limited to one or more of the parameters used to measure the performance of the AI/ML model, such as the accuracy, the precision, or the F1 score. For descriptions of the first training termination parameter, refer to the content in S601. Details are not described herein again.

In this embodiment of this application, the second device may determine the first training termination parameter for the AI/ML model. For example, the second device may determine the first training termination parameter in response to a requirement of a first device for a training result of the AI/ML model, or the like. Alternatively, the second device may actively determine the first training termination parameter for the AI/ML model. For example, the second device triggers training of the AI/ML model, and determines the first training termination parameter for the AI/ML model before performing training. It should be understood that a trigger condition for determining the first training termination parameter by the second device is not limited in this embodiment of this application.

For example, the second device may determine the first training termination parameter for the AI/ML model based on a requirement (for example, an application scenario or a performance requirement) of the AI/ML model, a historical training parameter of the AI/ML model, and/or the like. Alternatively, the second device may determine the first training termination parameter for the AI/ML model based on an external input. It should be understood that a specific implementation process in which the second device determines the first training termination parameter is not limited in this embodiment of this application. For descriptions of the first device, the second device, and the application scenario, refer to the foregoing descriptions. Details are not described herein again.

In a possible implementation, the first training termination parameter may further include one or more of an identifier of the AI/ML model, version information of the AI/ML model, or type information of the AI/ML model. The identifier of the AI/ML model may identify the AI/ML model. The version information of the AI/ML model may indicate a version of the AI/ML model. The type information of the AI/ML model may indicate a type of the AI/ML model. The type of the AI/ML model may be understood as the application scenario of the AI/ML model. For example, the type of the AI/ML model includes at least one of coverage problem analysis, energy saving analysis, slice coverage problem analysis, paging optimization analysis, fault analysis, fault prediction analysis, E2E latency analysis, mobility analysis, network slice load analysis, network slice throughput analysis, KPI anomaly analysis, or RAN software upgrade analysis. For details, refer to the related content in S601. Details are not described herein again.

S802: The second device performs training of the AI/ML model.

For example, the second device may perform training of the AI/ML model based on first data. The first data may be from the first device, or a part of the first data is from the first device, or the first data is data of the second device, or the like. A source of the first data is not limited in this embodiment of this application. The second device may initiate training of the AI/ML model in response to a request message from the first device, as shown in FIG. 4. Alternatively, the second device may actively initiate training of the AI/ML model, as shown in FIG. 5. This is not limited in this embodiment of this application. In addition, an algorithm and a specific implementation process used by the second device to train the AI/ML model are not limited in this embodiment of this application.

S803: The second device terminates training of the AI/ML model based on the first training termination parameter.

The second device performs training of the AI/ML model, and terminates training of the AI/ML model. In an example, an anomaly occurs during training of the AI/ML model, and the second device terminates training of the AI/ML model, for example, training data is inadequate. In still another example, a training parameter of the AI/ML model satisfies the first training termination parameter, and the second device terminates training of the AI/ML model. In FIG. 8, an example in which the second device terminates training of the AI/ML model based on the first training termination parameter is used. For a specific implementation process of S803, refer to the content in S604. Details are not described herein again.

S804: The second device sends a first message to the first device. Correspondingly, the first device receives the first message from the second device.

S804 is an optional step, and is represented by a dashed line in FIG. 8. The second device may send the first message to the first device, where the first message indicates that training of the AI/ML model is terminated, so that the first device determines that training of the AI/ML model has been terminated. Optionally, the first message may include one or more of the following information: the identifier of the AI/ML model, the version information of the AI/ML model, the type information of the AI/ML model, a performance parameter of the AI/ML model, duration consumed for training the AI/ML model, a quantity of iteration times for training the AI/ML model, progress information, first estimated duration, or a first estimated quantity of iteration times. Optionally, the first message may further include cause information for terminating training of the AI/ML model. For a specific implementation process of S804, refer to the content in S605. Details are not described herein again.

In the foregoing embodiment of this application, the second device may determine the first training termination parameter, and terminate training of the AI/ML model based on the determined first training termination parameter, implementing termination of training of the AI/ML model. Therefore, a training process of the AI/ML model is not performed infinitely, and training efficiency of the AI/ML model is improved.

Based on a same technical concept, an AI/ML MnS consumer may perform the steps performed by the first device in the procedure shown in FIG. 8, and a training control module and a training execution module in an AI/ML MnS producer may perform the steps performed by the second device in the procedure shown in FIG. 8. For details, refer to the descriptions in the procedure shown in FIG. 8.

For example, as shown in FIG. 9, the AI/ML MnS consumer is a cross-domain management function unit, and the AI/ML MnS producer is a domain management function unit.

The domain management function unit is the AI/ML MnS producer. A training control module in the domain management function unit may perform S801, that is, determine the first training termination parameter for the AI/ML model. A training execution module in the domain management function unit may perform S802 and S803, that is, perform training of the AI/ML model, and terminate training of the AI/ML model based on the first training termination parameter. Optionally, the training execution module in the domain management function unit may further perform S804, that is, send the first message to the cross-domain management function unit.

It should be understood that an execution sequence of the steps in FIG. 8 is merely an example, and this embodiment of this application is not limited thereto. For example, the second device may perform training of the AI/ML model after determining the first training termination parameter. Alternatively, the second device may first perform training of the AI/ML model, and determine the first training termination parameter in the training process of the AI/ML model.

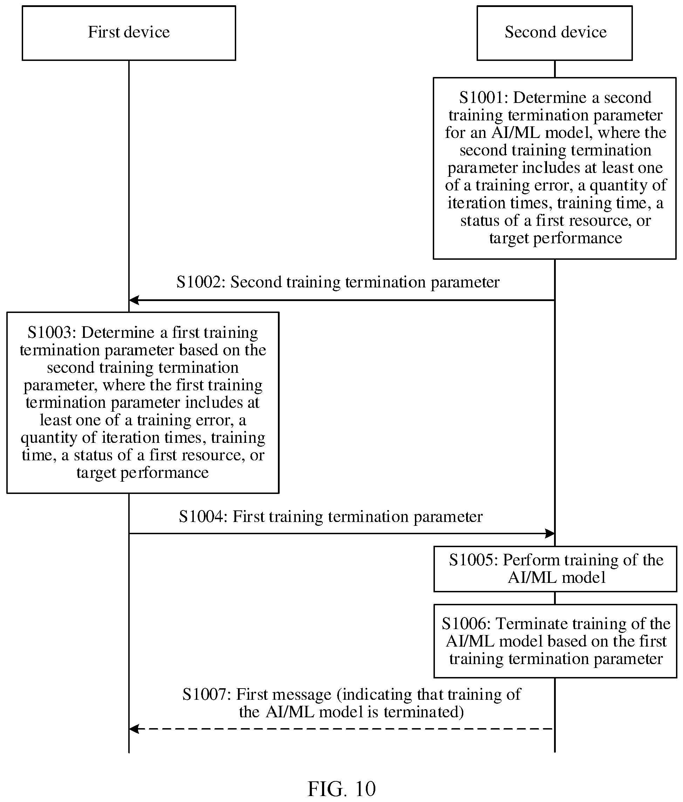

In the procedure shown in FIG. 8, the second device may determine a training termination parameter for the AI/ML model, and terminate training of the AI/ML model based on the training termination parameter in the training process of the AI/ML model. In another possible implementation, after determining a training termination parameter for the AI/ML model, the second device may send the training termination parameter to the first device, and the first device determines the training termination parameter again, to adapt to the requirement of the AI/ML model of the first device, as shown in FIG. 10.

FIG. 10 is a schematic flowchart of yet another communication method according to an embodiment of this application. As shown in FIG. 10, the method may include the following content.

S1004, S1005, S1006, and S1007 in FIG. 10 are respectively the same as S602, S603, S604, and S605 in FIG. 6. A difference is as follows:
S1001: A second device determines a second training termination parameter for an AI/ML model. The second training termination parameter may include one or more of the following parameters: a training error, a quantity of iteration times, training time, a status of a first resource, or target performance. The training error may be a difference between a predicted value inferred by the AI/ML model and a real value for inference of the AI/ML model. The first resource is a resource related to training of the AI/ML model. For example, the first resource may include but is not limited to a CPU resource, a storage resource, or a network resource. For example, the target performance may include but is not limited to one or more of parameters used to measure performance of the AI/ML model, such as accuracy, precision, or an F1 score.

Optionally, the second training termination parameter may further include one or more of the following parameters: an identifier of the AI/ML model, version information of the AI/ML model, or type information of the AI/ML model. The identifier of the AI/ML model may identify the AI/ML model. The version information of the AI/ML model may indicate a version of the AI/ML model. The type information of the AI/ML model may indicate a type of the AI/ML model. The type of the AI/ML model may be understood as an application scenario of the AI/ML model. For example, the type of the AI/ML model includes at least one of coverage problem analysis, energy saving analysis, slice coverage problem analysis, paging optimization analysis, fault analysis, fault prediction analysis, E2E latency analysis, mobility analysis, network slice load analysis, network slice throughput analysis, KPI anomaly analysis, or RAN software upgrade analysis. For details, refer to the related content in S601. Details are not described herein again.

For an implementation process of S1001, refer to the content in S801. Details are not described herein again.

After determining the second training termination parameter, the second device may terminate training of the AI/ML model based on the second training termination parameter, as shown in FIG. 8; or may send the second training termination parameter to a first device, that is, perform S1002. S1002: The second device sends the second training termination parameter to the first device. Correspondingly, the first device receives the second training termination parameter from the second device.

In addition to at least one of a training error, a quantity of iteration times, training time, a status of a first resource, or target performance, the second training termination parameter may further include at least one of the identifier of the AI/ML model, the version information of the AI/ML model, or the type information of the AI/ML model. In another possible implementation, the second training termination parameter may not include the identifier of the AI/ML model, the version information of the AI/ML model, and the type information of the AI/ML model. For example, the second training termination parameter and the identifier of the AI/ML model (and/or the version information of the AI/ML model and/or the type information of the AI/ML model) are carried in one message. For example, the second device may send a third message to the first device. The third message not only includes the second training termination parameter, but also includes at least one of the identifier of the AI/ML model, the version information of the AI/ML model, and the type information of the AI/ML model.

S1003: The first device determines a first training termination parameter based on the second training termination parameter.

The second training termination parameter may be the same as or different from the first training termination parameter. For example, after receiving the second training termination parameter, the first device determines that the second training termination parameter does not need to be modified. In this case, the second training termination parameter is the same as the first training termination parameter. For another example, after receiving the second training termination parameter, the first device modifies the second training termination parameter. In this case, the second training termination parameter may be different from the first training termination parameter. For example, the first device may modify the second training termination parameter based on a requirement (for example, the application scenario or a performance requirement) of the AI/ML model, a historical training parameter of the AI/ML model, and/or the like, to obtain the first training termination parameter.

It should be understood that if the first device determines that the second training termination parameter does not need to be modified, the first device may send, to the second device, the first training termination parameter that is the same as the second training termination parameter (that is, perform S1004); or the first device may send an acknowledgment message to the second device, so that the second device performs training of the AI/ML model based on the second training termination parameter.

It should be understood that an execution sequence of the steps in FIG. 10 is merely an example, and this embodiment of this application is not limited thereto. For example, the second device may perform training of the AI/ML model after receiving the first training termination parameter. Alternatively, the second device may first perform training of the AI/ML model, and receive the first training termination parameter from the first device in a training process of the AI/ML model. In the foregoing embodiment of this application, after determining a training termination parameter for the AI/ML model, the second device may send the training termination parameter to the first device, and the first device determines the training termination parameter again, to adapt to the requirement of the AI/ML model of the first device. In addition, training of the AI/ML model can be terminated. Therefore, the training process of the AI/ML model is not infinitely performed, and training efficiency of the AI/ML model is improved.

Based on a same technical concept, a training control module in an AI/ML MnS consumer may perform the steps performed by the first device in the procedure shown in FIG. 10, and a training control module and a training execution module in an AI/ML MnS producer may perform the steps performed by the second device in the procedure shown in FIG. 10. For details, refer to the descriptions in the procedure shown in FIG. 10.

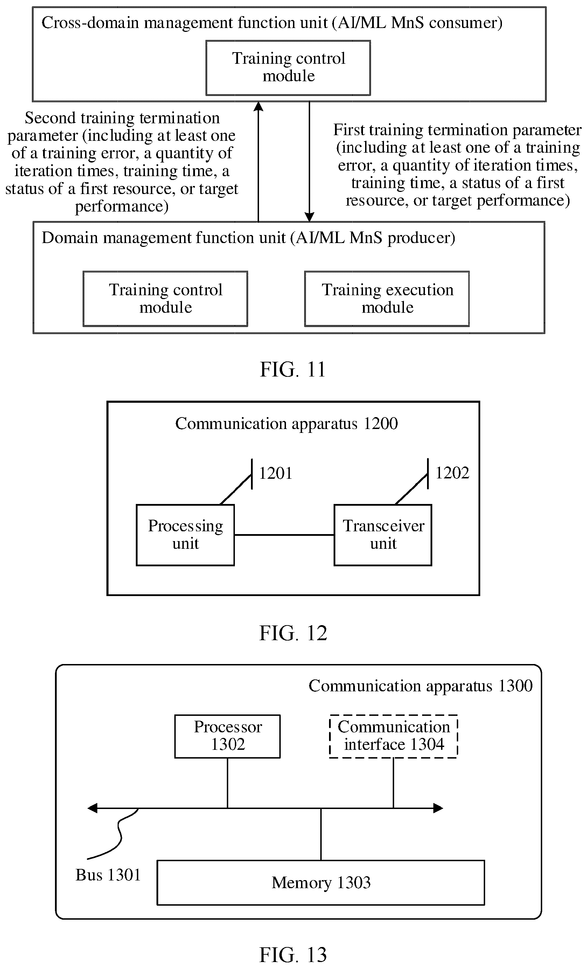

For example, as shown in FIG. 11, the AI/ML MnS consumer is a cross-domain management function unit, and the AI/ML MnS producer is a domain management function unit.

A training control module in the domain management function unit may perform S1001 and S1002, that is, determine the second training termination parameter for the AI/ML model, and send the second training termination parameter to a training control module in the cross-domain management function unit.

The training control module in the cross-domain management function unit may perform S1003 and S1004, that is, determine the first training termination parameter based on the second training termination parameter, and send the first training termination parameter to a training execution module in the domain management function unit.

The training execution module in the domain management function unit may perform S1005 and S1006, that is, perform training of the AI/ML model, and terminate training of the AI/ML model based on the first training termination parameter.

Optionally, the training execution module in the domain management function unit may further perform S1007, that is, send a first message to the cross-domain management function unit.

In the procedure shown in FIG. 10, the second device determines the second training termination parameter, and sends the second training termination parameter to the first device. The first device determines the first training termination parameter based on the second training termination parameter, and sends the first training termination parameter to the second device. The second device terminates training of the AI/ML model based on the first training termination parameter in a process of performing training of the AI/ML model. In another possible implementation, the second device determines the second training termination parameter, and may send the second training termination parameter to the first device, and terminate training of the AI/ML model based on the second training termination parameter in a process of performing training of the AI/ML model. In other words, after receiving the second training termination parameter from the second device, the first device does not need to execute the content in S1003 and S1004 (equivalent to adding, to the procedure shown in FIG. 8, a step that the second device sends the first training termination parameter to the first device). It should be understood that an execution sequence in which the second device sends the second training termination parameter to the first device is not limited in this implementation. For example, the second device may send the second training termination parameter to the first device after terminating training of the AI/ML model based on the second training termination parameter. For example, the first message includes the second training termination parameter. For another example, the second device may send the second training termination parameter to the first device after determining the second training termination parameter and before performing training of the AI/ML model. For another example, the second device may send the second training termination parameter to the first device after determining the second training termination parameter and in the process of performing training of the AI/ML model.

Based on a same technical concept, an embodiment of this application further provides a communication apparatus 1200. The communication apparatus 1200 may implement a function of the first device or the second device in any one of the foregoing embodiments in FIG. 6 to FIG. 11. As shown in FIG. 12, the communication apparatus 1200 includes a processing unit 1201 and a transceiver unit 1202. Optionally, the communication apparatus 1200 may further include a storage unit, which is not shown in FIG. 12. For example, the storage unit may store training data. In an example, the communication apparatus 1200 may implement the function of the first device in any one of the foregoing embodiments in FIG. 6 to FIG. 11.

The processing unit 1201 is configured to determine a first training termination parameter for an AI/ML model, where the first training termination parameter may include one or more of a training error, a quantity of iteration times, training time, a status of a first resource, or target performance, and the first resource is a resource related to training of the AI/ML model.

The transceiver unit 1202 is configured to send the first training termination parameter to a second device configured to train the AI/ML model, where the first training termination parameter is used to terminate training of the AI/ML model.

In a possible implementation, the communication apparatus 1200 may be an AI/ML model training consumer, and the second device may be an AI/ML model training producer. For example, the AI/ML model training consumer may include a domain management function unit or a cross-domain management function unit. For example, the AI/ML model training producer may include a domain management function unit or a cross-domain management function unit. It may be understood that in this embodiment of this application, the AI/ML model training consumer may be an AI/ML MnS consumer, and the AI/ML model training producer may be an AI/ML MnS producer.

In a possible implementation, the target performance may include one or more of accuracy, precision, or an F1 score.

In a possible implementation, the first resource may include the resource related to training of the AI/ML model in a central processing unit (central processing unit, CPU) resource, a storage resource, a network resource, or the like.

In a possible implementation, the transceiver unit 1202 is further configured to receive a first message from the second device, where the first message indicates that training of the AI/ML model is terminated.

In a possible implementation, the first message includes cause information for terminating training of the AI/ML model, and the cause information may indicate a training anomaly of the AI/ML model, or indicate that a training parameter of the AI/ML model satisfies the first training termination parameter.

In a possible implementation, if the cause information indicates the training anomaly of the AI/ML model, and the training anomaly of the AI/ML model is AI/ML that training data of the AI/ML model is inadequate, the transceiver unit 1202 is further configured to send, to the second device, training data used to train the AI/ML model.

In a possible implementation, the first message may further include one or more of the following information:
an identifier of the AI/ML model;
type information of the AI/ML model;
version information of the AI/ML model;
a performance parameter of the AI/ML model;
duration consumed for training the AI/ML model;
a quantity of iteration times for training the AI/ML model;
progress information, where the progress information is a progress of completing training of the AI/ML model by the second device when the second device terminates training of the AI/ML model;
first estimated duration, where the first estimated training duration is duration further needed by the second device to complete training of the AI/ML model when the second device terminates training of the AI/ML model; or
a first estimated quantity of iteration times, where the first estimated quantity of iteration times is a quantity of iteration times further needed by the second device to complete training of the AI/ML model when the second device terminates training of the AI/ML model.

In a possible implementation, the processing unit 1201 is configured to determine the first training termination parameter for the artificial intelligence/machine learning AI/ML model in the following manner: controlling the transceiver unit 1202 to receive a second training termination parameter for the AI/ML model from the second device, where the second training termination parameter includes one or more of the following parameters: a training error, a quantity of iteration times, training time, a status of a first resource, or target performance; and determining the first training termination parameter based on the second training termination parameter.

In a possible implementation, the first training termination parameter may further include the identifier of the AI/ML model and/or the type information of the AI/ML model. The type information of the AI/ML model indicates a type of the AI/ML model. The type of the AI/ML model may include one or more of coverage problem analysis, slice coverage problem analysis, paging optimization analysis, fault analysis, fault prediction analysis, end-to-end latency analysis, energy saving analysis, mobility analysis, network slice load analysis, network slice throughput analysis, key performance indicator anomaly analysis, or software upgrade analysis.

In a possible implementation, the first training termination parameter includes the training error and the type information of the AI/ML model, and the type information of the AI/ML model indicates that the type of the AI/ML model is coverage problem analysis. In this case, the training error is an error corresponding to a coverage problem. The coverage problem may include one or more of a weak coverage problem, an over coverage problem, an overshoot coverage problem, a coverage hole problem, or a pilot pollution problem. The error corresponding to the coverage problem includes one or more of an error of reference signal received power, an error of reference signal received quality, or an error of a signal to interference plus noise ratio.

In another possible implementation, the first training termination parameter includes the training error and the type information of the AI/ML model, and the type information of the AI/ML model indicates that the type of the AI/ML model is energy saving analysis. In this case, the training error includes an error of energy efficiency and/or an error of energy consumption.

In another example, the communication apparatus 1200 may implement the function of the second device in any one of the foregoing embodiments in FIG. 6 to FIG. 11.

The processing unit 1201 is configured to determine a first training termination parameter for an AI/ML model, where the first training termination parameter includes one or more of the following parameters: a training error, a quantity of iteration times, training time, a status of a first resource, or target performance, and the first resource is a resource related to training of the AI/ML model. The transceiver unit 1202 is configured to: perform training of the AI/ML model, and terminate training of the AI/ML model based on the first training termination parameter.

In a possible implementation, the transceiver unit 1202 is further configured to send a first message to a first device, where the first message indicates that training of the AI/ML model is terminated. In a possible implementation, the first device may be an AI/ML model training consumer, and the communication apparatus 1200 may be an AI/ML model training producer. For example, the AI/ML model training consumer may include a domain management function unit or a cross-domain management function unit. For example, the AI/ML model training producer may include a domain management function unit or a cross-domain management function unit. It may be understood that in this embodiment of this application, the AI/ML model training consumer may be an AI/ML MnS consumer, and the AI/ML model training producer may be an AI/ML MnS producer.

In a possible implementation, the target performance may include one or more of accuracy, precision, or an F1 score.

In a possible implementation, the first resource may include the resource related to training of the AI/ML model in a CPU resource, a storage resource, a network resource, or the like.

In a possible implementation, the first message includes cause information for terminating training of the AI/ML model, and the cause information indicates that a training parameter of the AI/ML model satisfies the first training termination parameter.

In a possible implementation, the first message further includes one or more of the following information:
an identifier of the AI/ML model;
type information of the AI/ML model;
version information of the AI/ML model;
a performance parameter of the AI/ML model;
duration consumed for training the AI/ML model;
a quantity of iteration times for training the AI/ML model;
progress information, where the progress information is a progress of completing training of the AI/ML model by the second device when the second device terminates training of the AI/ML model;
first estimated duration, where the first estimated training duration is duration further needed by the second device to complete training of the AI/ML model when the second device terminates training of the AI/ML model; or
a first estimated quantity of iteration times, where the first estimated quantity of iteration times is a quantity of iteration times further needed by the second device to complete training of the AI/ML model when the second device terminates training of the AI/ML model.

In a possible implementation, the processing unit 1201 is configured to determine the first training termination parameter in the following manner: controlling the transceiver unit 1202 to receive the first training termination parameter from the first device.

In a possible implementation, before the second device receives the first training termination parameter from the first device, the processing unit 1201 is further configured to determine a second training termination parameter for the AI/ML model, where the second training termination parameter includes one or more of the following parameters: a training error, a quantity of iteration times, training time, a status of a first resource, or target performance. The transceiver unit 1202 is further configured to send the second training termination parameter to the first device.

In a possible implementation, the transceiver unit 1202 is further configured to receive, from the first device, training data used to train the AI/ML model.

In a possible implementation, the processing unit 1201 is configured to perform training of the AI/ML model in the following manner: performing training of the AI/ML model based on first data.

In a possible implementation, the first training termination parameter may further include the identifier of the AI/ML model and/or the type information of the AI/ML model. The type information of the AI/ML model indicates a type of the AI/ML model. The type of the AI/ML model may include one or more of coverage problem analysis, slice coverage problem analysis, paging optimization analysis, fault analysis, fault prediction analysis, end-to-end latency analysis, energy saving analysis, mobility analysis, network slice load analysis, network slice throughput analysis, key performance indicator anomaly analysis, or software upgrade analysis.

In a possible implementation, the first training termination parameter includes the training error and the type information of the AI/ML model, and the type information of the AI/ML model indicates that the type of the AI/ML model is coverage problem analysis. In this case, the training error is an error corresponding to a coverage problem. The coverage problem may include one or more of a weak coverage problem, an over coverage problem, an overshoot coverage problem, a coverage hole problem, or a pilot pollution problem. The error corresponding to the coverage problem includes one or more of an error of reference signal received power, an error of reference signal received quality, or an error of a signal to interference plus noise ratio.

In a possible implementation, the first training termination parameter includes the training error and the type information of the AI/ML model, and the type information of the AI/ML model indicates that the type of the AI/ML model is energy saving analysis. In this case, the training error includes an error of energy efficiency and/or an error of energy consumption.

For the foregoing specific implementation process, refer to the descriptions of the foregoing embodiments. Details are not described herein again.

Based on a same technical concept, an embodiment of this application further provides a communication apparatus 1300. As shown in FIG. 13, the communication apparatus 1300 includes a bus 1301, a processor 1302, and a memory 1303. Optionally, the communication apparatus 1300 may further include a communication interface 1304 (represented by a dashed line in FIG. 13). The processor 1302, the memory 1303, and the communication interface 1304 communicate with each other through the bus 1301. The communication apparatus 1300 may be a first device or a second device. It should be understood that quantities of processors and memories in the communication apparatus 1300 are not limited in this embodiment of this application.

The bus 1301 may be a peripheral component interconnect (peripheral component interconnect, PCI) bus, an extended industry standard architecture (extended industry standard architecture, EISA) bus, or the like. The bus may be classified as an address bus, a data bus, a control bus, or the like. For ease of representation, only one line is used for representation in FIG. 13, but it does not mean that there is only one bus or only one type of bus. The bus 1301 may include a path for transmitting information between components (for example, the memory 1303, the processor 1302, and the communication interface 1304) of the communication apparatus 1300.

The processor 1302 may be a central processing unit (central processing unit, CPU), a graphics processing unit (graphics processing unit, GPU), a microprocessor (microprocessor, MP), a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. A general purpose processor may be a microprocessor or any regular processor.

The memory 1303 may include a volatile memory (volatile memory), for example, a random access memory (random access memory, RAM). The processor 1302 may further include a non-volatile memory (non-volatile memory), for example, a read-only memory (read-only memory, ROM), a flash memory, a hard disk drive (hard disk drive, HDD), or a solid state drive (solid state drive, SSD). The memory 1303 stores executable program code. The processor 1302 executes the executable program code to implement the content executed by the first device or the second device in any one of the embodiments in FIG. 6 to FIG. 11.

The communication interface 1304 uses a transceiver unit, for example, but not limited to, a network interface card or a transceiver, to implement communication between the communication apparatus 1300 and another device or a communication network.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions. The instructions instruct the computing device to perform the method described in any one of the foregoing embodiments.

An embodiment of this application further provides a computer program product including instructions. The computer program product may be software or a program product that includes the instructions and that can be run on a computing device or stored in any usable medium. When the computer program product is run on the computing device, the computing device is enabled to perform the methods described in embodiments.

An embodiment of this application provides a chip system. The chip system includes a processor, may further include a memory, and is configured to implement a function of the first device or the second device in the foregoing methods. The chip system may include a chip, or may include a chip and another discrete component.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method comprises:
determining, by a first device, a first training termination parameter for an artificial intelligence/machine learning AI/ML model, wherein the first training termination parameter comprises one or more of the following parameters: a training error, a quantity of iteration times, training time, a status of a first resource, or target performance, and the first resource is a resource related to training of the AI/ML model; and
sending, by the first device, the first training termination parameter to a second device configured to train the AI/ML model, wherein the first training termination parameter is used to terminate training of the AI/ML model.

2. The method according to claim 1, wherein the method further comprises:
receiving, by the first device, a first message from the second device, wherein the first message indicates that training of the AI/ML model is terminated.

3. The method according to claim 2, wherein the first message further comprises cause information for terminating training of the AI/ML model, and the cause information indicates a training anomaly of the AI/ML model, or indicates that a training parameter of the AI/ML model satisfies the first training termination parameter.

4. The method according to claim 3, wherein the cause information indicates the training anomaly of the AI/ML model, the training anomaly of the AI/ML model is that training data of the AI/ML model is inadequate, and the method further comprises:
sending, by the first device to the second device, training data used to train the AI/ML model.

5. The method according to any one of claims 2 to 4, wherein the first message comprises one or more of the following information:
an identifier of the AI/ML model;
type information of the AI/ML model;
a performance parameter of the AI/ML model;
duration consumed for training the AI/ML model;
a quantity of iteration times for training the AI/ML model;
progress information, wherein the progress information is a progress of completing training of the AI/ML model by the second device when the second device terminates training of the AI/ML model;
first estimated duration, wherein the first estimated training duration is duration further needed by the second device to complete training of the AI/ML model when the second device terminates training of the AI/ML model; or
a first estimated quantity of iteration times, wherein the first estimated quantity of iteration times is a quantity of iteration times further needed by the second device to complete training of the AI/ML model when the second device terminates training of the AI/ML model.

6. The method according to any one of claims 1 to 5, wherein the determining, by a first device, a first training termination parameter for an artificial intelligence/machine learning AI/ML model comprises:
receiving, by the first device, a second training termination parameter for the AI/ML model from the second device, wherein the second training termination parameter comprises one or more of the following parameters: a training error, a quantity of iteration times, training time, a status of a first resource, or target performance; and
determining, by the first device, the first training termination parameter based on the second training termination parameter.

7. The method according to any one of claims 1 to 6, wherein the first training termination parameter further comprises the identifier of the AI/ML model and/or the type information of the AI/ML model, and a type of the AI/ML model comprises one or more of the following: coverage problem analysis, slice coverage problem analysis, paging optimization analysis, fault analysis, fault prediction analysis, end-to-end latency analysis, energy saving analysis, mobility analysis, network slice load analysis, network slice throughput analysis, key performance indicator anomaly analysis, or software upgrade analysis.

8. The method according to claim 7, wherein the first training termination parameter comprises the training error and the type information of the AI/ML model; and
the type information of the AI/ML model indicates that the type of the AI/ML model is coverage problem analysis, the training error is an error corresponding to a coverage problem, the coverage problem comprises one or more of a weak coverage problem, an over coverage problem, an overshoot coverage problem, a coverage hole problem, or a pilot pollution problem, and the error corresponding to the coverage problem comprises one or more of an error of reference signal received power, an error of reference signal received quality, or an error of a signal to interference plus noise ratio.

9. The method according to claim 7, wherein the first training termination parameter comprises the training error and the type information of the AI/ML model; and
the type information of the AI/ML model indicates that the type of the AI/ML model is energy saving analysis, and the training error comprises an error of energy efficiency and/or an error of energy consumption.

10. A communication method, wherein the method comprises:
determining, by a second device, a first training termination parameter for an artificial intelligence/machine learning AI/ML model, wherein the first training termination parameter comprises one or more of the following parameters: a training error, a quantity of iteration times, training time, a status of a first resource, or target performance, and the first resource is a resource related to training of the AI/ML model;
performing, by the second device, training of the AI/ML model; and
terminating, by the second device, training of the AI/ML model based on the first training termination parameter.

11. The method according to claim 10, wherein the method further comprises:
sending, by the second device, a first message to a first device, wherein the first message indicates that training of the AI/ML model is terminated.

12. The method according to claim 11, wherein the first message comprises cause information for terminating training of the AI/ML model, and the cause information indicates that a training parameter of the AI/ML model satisfies the first training termination parameter.

13. The method according to claim 11 or 12, wherein the first message further comprises one or more of the following information:
an identifier of the AI/ML model;
type information of the AI/ML model;
a performance parameter of the AI/ML model;
duration consumed for training the AI/ML model;
a quantity of iteration times for training the AI/ML model;
progress information, wherein the progress information is a progress of completing training of the AI/ML model by the second device when the second device terminates training of the AI/ML model;
first estimated duration, wherein the first estimated training duration is duration further needed by the second device to complete training of the AI/ML model when the second device terminates training of the AI/ML model; or
a first estimated quantity of iteration times, wherein the first estimated quantity of iteration times is a quantity of iteration times further needed by the second device to complete training of the AI/ML model when the second device terminates training of the AI/ML model.

14. The method according to any one of claims 10 to 13, wherein the determining, by a second device, a first training termination parameter comprises:
receiving, by the second device, the first training termination parameter from the first device.

15. The method according to claim 14, wherein before the receiving, by the second device, the first training termination parameter from the first device, the method further comprises:
determining, by the second device, a second training termination parameter for the AI/ML model, wherein the second training termination parameter comprises one or more of the following parameters: a training error, a quantity of iteration times, training time, a status of a first resource, or target performance; and
sending, by the second device, the second training termination parameter to the first device.

16. The method according to any one of claims 10 to 15, wherein the method further comprises:
receiving, by the second device from the first device, training data used to train the AI/ML model.

17. The method according to any one of claims 10 to 16, wherein the first training termination parameter further comprises the identifier of the AI/ML model and/or the type information of the AI/ML model, and a type of the AI/ML model comprises one or more of the following: coverage problem analysis, slice coverage problem analysis, paging optimization analysis, fault analysis, fault prediction analysis, end-to-end latency analysis, energy saving analysis, mobility analysis, network slice load analysis, network slice throughput analysis, key performance indicator anomaly analysis, or software upgrade analysis.

18. The method according to claim 17, wherein the first training termination parameter comprises the training error and the type information of the AI/ML model; and
the type information of the AI/ML model indicates that the type of the AI/ML model is coverage problem analysis, the training error is an error corresponding to a coverage problem, the coverage problem comprises one or more of a weak coverage problem, an over coverage problem, an overshoot coverage problem, a coverage hole problem, or a pilot pollution problem, and the error corresponding to the coverage problem comprises one or more of an error of reference signal received power, an error of reference signal received quality, or an error of a signal to interference plus noise ratio.

19. The method according to claim 17, wherein the first training termination parameter comprises the training error and the type information of the AI/ML model; and
the type information of the AI/ML model indicates that the type of the AI/ML model is energy saving analysis, and the training error comprises an error of energy efficiency and/or an error of energy consumption.

20. A communication apparatus, comprising a processing unit and a transceiver unit, wherein
the processing unit is configured to determine a first training termination parameter for an artificial intelligence/machine learning AI/ML model, wherein the first training termination parameter comprises one or more of the following parameters: a training error, a quantity of iteration times, training time, a status of a first resource, or target performance, and the first resource is a resource related to training of the AI/ML model; and
the transceiver unit is configured to send the first training termination parameter to a second device configured to train the AI/ML model, wherein the first training termination parameter is used to terminate training of the AI/ML model.

21. The apparatus according to claim 20, wherein the transceiver unit is further configured to:
receive a first message from the second device, wherein the first message indicates that training of the AI/ML model is terminated.

22. The apparatus according to claim 21, wherein the first message further comprises cause information for terminating training of the AI/ML model, and the cause information indicates a training anomaly of the AI/ML model, or indicates that a training parameter of the AI/ML model satisfies the first training termination parameter.

23. The apparatus according to claim 22, wherein the cause information indicates the training anomaly of the AI/ML model, the training anomaly of the AI/ML model is that training data of the AI/ML model is inadequate, and the transceiver unit is further configured to:
send, to the second device, training data used to train the AI/ML model.

24. The apparatus according to any one of claims 21 to 23, wherein the first message comprises one or more of the following information:
an identifier of the AI/ML model;
type information of the AI/ML model;
a performance parameter of the AI/ML model;
duration consumed for training the AI/ML model;
a quantity of iteration times for training the AI/ML model;
progress information, wherein the progress information is a progress of completing training of the AI/ML model by the second device when the second device terminates training of the AI/ML model;
first estimated duration, wherein the first estimated training duration is duration further needed by the second device to complete training of the AI/ML model when the second device terminates training of the AI/ML model; or
a first estimated quantity of iteration times, wherein the first estimated quantity of iteration times is a quantity of iteration times further needed by the second device to complete training of the AI/ML model when the second device terminates training of the AI/ML model.

25. The apparatus according to any one of claims 20 to 24, wherein when the first training termination parameter for the artificial intelligence/machine learning AI/ML model is determined:
the transceiver unit is configured to receive a second training termination parameter for the AI/ML model from the second device, wherein the second training termination parameter comprises one or more of the following parameters: a training error, a quantity of iteration times, training time, a status of a first resource, or target performance; and
the processing unit is configured to determine the first training termination parameter based on the second training termination parameter.

26. The apparatus according to any one of claims 20 to 25, wherein the first training termination parameter further comprises the identifier of the AI/ML model and/or the type information of the AI/ML model, and a type of the AI/ML model comprises one or more of the following: coverage problem analysis, slice coverage problem analysis, paging optimization analysis, fault analysis, fault prediction analysis, end-to-end latency analysis, energy saving analysis, mobility analysis, network slice load analysis, network slice throughput analysis, key performance indicator anomaly analysis, or software upgrade analysis.

27. The apparatus according to claim 26, wherein the first training termination parameter comprises the training error and the type information of the AI/ML model; and
the type information of the AI/ML model indicates that the type of the AI/ML model is coverage problem analysis, the training error is an error corresponding to a coverage problem, the coverage problem comprises one or more of a weak coverage problem, an over coverage problem, an overshoot coverage problem, a coverage hole problem, or a pilot pollution problem, and the error corresponding to the coverage problem comprises one or more of an error of reference signal received power, an error of reference signal received quality, or an error of a signal to interference plus noise ratio.

28. The apparatus according to claim 26, wherein the first training termination parameter comprises the training error and the type information of the AI/ML model; and
the type information of the AI/ML model indicates that the type of the AI/ML model is energy saving analysis, and the training error comprises an error of energy efficiency and/or an error of energy consumption.

29. A communication apparatus, comprising a processing unit, wherein
the processing unit is configured to: determine a first training termination parameter for an artificial intelligence/machine learning AI/ML model, wherein the first training termination parameter comprises one or more of the following parameters: a training error, a quantity of iteration times, training time, a status of a first resource, or target performance, and the first resource is a resource related to training of the AI/ML model; perform training of the AI/ML model; and terminate training of the AI/ML model based on the first training termination parameter.

30. The apparatus according to claim 29, wherein the apparatus further comprises a transceiver unit, and the transceiver unit is configured to:
send a first message to a first device, wherein the first message indicates that training of the AI/ML model is terminated.

31. The apparatus according to claim 30, wherein the first message comprises cause information for terminating training of the AI/ML model, and the cause information indicates that a training parameter of the AI/ML model satisfies the first training termination parameter.

32. The apparatus according to claim 30 or 31, wherein the first message further comprises one or more of the following information:
an identifier of the AI/ML model;
type information of the AI/ML model;
a performance parameter of the AI/ML model;
duration consumed for training the AI/ML model;
a quantity of iteration times for training the AI/ML model;
progress information, wherein the progress information is a progress of completing training of the AI/ML model by the communication apparatus when the communication apparatus terminates training of the AI/ML model;
first estimated duration, wherein the first estimated training duration is duration further needed by the communication apparatus to complete training of the AI/ML model when the communication apparatus terminates training of the AI/ML model; or
a first estimated quantity of iteration times, wherein the first estimated quantity of iteration times is a quantity of iteration times further needed by the communication apparatus to complete training of the AI/ML model when the communication apparatus terminates training of the AI/ML model.

33. The apparatus according to any one of claims 29 to 32, wherein the apparatus further comprises the transceiver unit, and when the first training termination parameter is determined, the transceiver unit is configured to:
receive the first training termination parameter from the first device.

34. The apparatus according to claim 33, wherein before the first training termination parameter is received from the first device:
the processing unit is further configured to determine a second training termination parameter for the AI/ML model, wherein the second training termination parameter comprises one or more of the following parameters: a training error, a quantity of iteration times, training time, a status of a first resource, or target performance; and
the transceiver unit is further configured to send, by the communication apparatus, the second training termination parameter to the first device.

35. The apparatus according to any one of claims 29 to 34, wherein the apparatus further comprises the transceiver unit, and the transceiver unit is configured to:
receive, from the first device, training data used to train the AI/ML model.

36. The apparatus according to any one of claims 29 to 35, wherein the first training termination parameter further comprises the identifier of the AI/ML model and/or the type information of the AI/ML model, and a type of the AI/ML model comprises one or more of the following: coverage problem analysis, slice coverage problem analysis, paging optimization analysis, fault analysis, fault prediction analysis, end-to-end latency analysis, energy saving analysis, mobility analysis, network slice load analysis, network slice throughput analysis, key performance indicator anomaly analysis, or software upgrade analysis.

37. The apparatus according to claim 36, wherein the first training termination parameter comprises the training error and the type information of the AI/ML model; and
the type information of the AI/ML model indicates that the type of the AI/ML model is coverage problem analysis, the training error is an error corresponding to a coverage problem, the coverage problem comprises one or more of a weak coverage problem, an over coverage problem, an overshoot coverage problem, a coverage hole problem, or a pilot pollution problem, and the error corresponding to the coverage problem comprises one or more of an error of reference signal received power, an error of reference signal received quality, or an error of a signal to interference plus noise ratio.

38. The apparatus according to claim 36, wherein the first training termination parameter comprises the training error and the type information of the AI/ML model; and
the type information of the AI/ML model indicates that the type of the AI/ML model is energy saving analysis, and the training error comprises an error of energy efficiency and/or an error of energy consumption.

39. A computer-readable storage medium, wherein the computer-readable storage medium is configured to store a computer program, and when the computer program is run on a computer, the computer is enabled to perform the method according to any one of claims 1 to 9, or the computer is enabled to perform the method according to any one of claims 10 to 19.

40. A computer program product, wherein when the computer program product is run on a computer, the computer is enabled to perform the method according to any one of claims 1 to 9, or the computer is enabled to perform the method according to any one of claims 10 to 19.

41. A communication system, comprising the communication apparatus according to any one of claims 20 to 28, and/or comprising the communication apparatus according to any one of claims 29 to 38.

42. A chip system, wherein the chip system comprises a processor, configured to perform the method according to any one of claims 1 to 9, or enable the computer to perform the method according to any one of claims 10 to 19.

43. A communication apparatus, comprising at least one processor and a memory, wherein the at least one processor is configured to execute instructions stored in the memory, so that the communication apparatus performs the method according to any one of claims 1 to 9, or the computer performs the method according to any one of claims 10 to 19.
